# EUROPÄISCHE PATENTANMELDUNG

(11) **EP 2 062 926 A1**
(43) Veröffentlichungstag der Anmeldung: **27.05.2009**
(21) Anmeldenummer: 07121163.5
(22) Anmeldetag: 21.11.2007
(51) Int. Cl.: C08G 18/10, C08G 18/12, C08G 18/48, C09J 175/02

(54) **Polyurethanpolymer für reversible Klebeverbindungen**

(71) Anmelder: Sika Technology AG, 6340 Baar (CH)
(72) Erfinder: Burckhardt, Urs, 8049, Zürich (CH)
(74) Vertreter: Sika Patent Attorneys

(57) **Zusammenfassung**

Die vorliegende Erfindung betrifft ein Polyurethanpolymer, welches sterisch gehinderte Harnstoffgruppen aufweist, die dazu führen, dass das Polyurethan an diesen Stellen eine thermische Labilität aufweist. Weiterhin betrifft die Erfindung eine Zusammensetzung zur Herstellung eines solchen Polyurethanpolymers, welche für die Herstellung von reversiblen Klebeverbindungen, Abdichtungen und Beschichtungen geeignet ist.
Anwendung findet ein erfindungsgemässes Polyurethanpolymer, bzw. die entsprechende Zusammensetzung zu dessen Herstellung, insbesondere im Automobilbau, wo die Möglichkeit der Entklebung von angeklebten Bauteilen und Fensterscheiben die Demontage für Reparaturzwecke oder auch für Verwertung und Recycling von Alt- und Unfallautos eine bedeutende Rolle spielt.

## Beschreibung

### Technisches Gebiet

Die Erfindung betrifft das Gebiet der Polyurethanpolymere, welche für reversible Klebeverbindungen geeignet sind.

### Stand der Technik

Seit geraumer Zeit stellt das beabsichtigte Lösen von Klebeverbindungen, das so genannte Entkleben, eine besondere Herausforderung in der Klebetechnik dar. Ein besonderes Interesse liegt dabei im Entkleben von elastischen Klebeverbindungen, welche typischerweise mittels Polyurethan-klebstoffen hergestellt werden. Dementsprechend zahlreich sind die beschriebenen Ansätze zur raschen Entklebung von Klebeverbindungen. Insbesondere bei der Reparatur, der Verwertung oder dem Recycling von verklebten Bauteilen ist die Möglichkeit einer raschen Entklebung der Klebeverbindung ein wichtiges Anliegen.

Die im Stand der Technik beschriebenen Entklebungsverfahren sind im Wesentlichen in zwei Klassen einzuteilen, wobei bei der ersten die Entklebung nicht im Klebeverbund vorbereitet ist, sondern durch geeignete Methoden von aussen herbeigeführt wird, beispielsweise durch mechanische Verfahren wie Schneiden mittels eines Drahtes, eines Messers oder eines Lasers oder auch durch Pyrolyse des Klebstoffs mittels heisser Luft, Mikrowellenstrahlung oder elektrischen Stroms. Eine mögliche Ausführungsform einer solchen Methode ist beispielsweise beschrieben in US 5,159,865 und geht aus von einem Gerät und einem entsprechenden Verfahren, bei welchem die Klebeverbindung mittels einer elektrisch beheizten, vibrierenden Klinge aufgeschnitten wird.

Die zweite Klasse von Entklebungsverfahren geht aus von so genannten "internen" Systemen, bei welchen die Entklebung teilweise oder vollständig innerhalb der Klebeverbindung oder an deren Grenzfläche mit dem Substrat vorbereitet ist.

Wie in WO 00/75254 A1 beschrieben, können dies beispielsweise im Klebstoff angeordnete, thermisch expandierbare Mikrokapseln sein, welche unter Temperatureinfluss den Klebverbund mechanisch zerstören. Weiterhin können dies, wie in WO 00/73398 A1 beschrieben, auch im Klebstoff vorhandene elektrisch leitfähige oder magnetische Teilchen sein, welche mit Hilfe von elektrischen, magnetischen oder elektromagnetischen Wechselfeldern eine schnelle und gezielte Erhitzung der Klebstoffschicht erlauben und somit die Trennung des Klebverbundes ermöglichen. Weitere derartige Hilfsmittel sind beispielsweise beschrieben in EP 1 115 770 A1 und weisen eine blockierte Komponente, beispielsweise ein organisches Amin oder eine organische Säure, auf, welche bei Energieeintrag mit dem Klebstoff reagiert und zumindest zum teilweisen Abbau des Klebstoffs führt.

In weiteren internen Systemen zur Entklebung weist der Klebstoff selbst eine Schwachstelle in Form einer unstabilen chemischen Bindung auf, welche durch Energieeintrag gezielt zu Bruch gebracht werden kann. Beispiele für derartige Systeme sind beschrieben in US 4,882,399 und US 6,746,562.

Unabhängig davon, ob diese internen Entklebungsverfahren zu einem Zerfall der Polymere im Klebstoff führen oder nicht, weisen sie den Nachteil auf, dass sie nicht reversibel verlaufen und dass sie in der Anwendung mit einem hohen Aufwand verbunden sind, indem beispielsweise zusätzliche Zwischenschichten aufgetragen werden müssen oder schwer einarbeitbare Zusatzkomponenten in den Klebstoff eingebracht werden müssen, welche zudem die Eigenschaften der Klebeverbindung während ihrer Gebrauchszeit unzulässig einschränken können.

### Darstellung der Erfindung

Aufgabe der vorliegenden Erfindung ist es daher, ein Polyurethanpolymer zur Verfügung zu stellen, welches eine labile Gruppe aufweist und unter Temperatureinfluss reversibel zerfällt, wobei das Polyurethanpolymer aus einfachen Komponenten ohne grossen Aufwand herstellbar ist, vielseitig einsetzbar ist und eine gezielte, rasche und zuverlässige Entklebung ermöglicht.

Überraschenderweise wurde nun gefunden, dass das Polyurethanpolymer nach Anspruch 1 diese Aufgabe lösen kann. Die im Gerüst des Polyurethanpolymers vorhandenen sterisch gehinderten Harnstoffgruppen lassen sich unter Einfluss von Temperatur reversibel lösen.

Derartige Polyurethanpolymere lassen sich aus Zusammensetzungen herstellen, welche sich als Klebstoffe, Dichtstoffe oder als Zusammensetzungen zur Herstellung von Beschichtungen bestens eignen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist in einem ersten Aspekt ein Polyurethanpolymer P enthaltend mindestens eine Harnstoffgruppe, wobei
A) die Harnstoffgruppe disubstituiert ist und dasjenige Stickstoffatom, welches beim Aufbau dieser Harnstoffgruppe aus einer Isocyanatgruppe und einer primären Aminogruppe von der primären Aminogruppe stammt, direkt zu einem tertiären Kohlenstoffatom gebunden ist;
   und/oder
B) die Harnstoffgruppe trisubstituiert ist und dasjenige Stickstoffatom, welches beim Aufbau dieser Harnstoffgruppe aus einer Isocyanatgruppe und einer sekundären Aminogruppe von der sekundären Aminogruppe stammt, direkt zu mindestens einem sekundären oder tertiären Kohlenstoffatom gebunden ist.

Durch den Einbau von derartigen sterisch gehinderten Harnstoffgruppen in ein Polyurethanpolymer mittels Reaktion von Isocyanatgruppen eines Polyisocyanats mit den sterisch gehinderten Aminogruppen eines sterisch gehinderten Diamins, wird das Polyurethanpolymer im Polymergerüst mit thermisch labilen Strukturelementen ausgestattet, welche bei Erwärmung unter Spaltung von C-N-Bindungen in Isocyanat- und Aminogruppen zerfallen. Überraschenderweise ist diese Reaktion reversibel, so dass die Isocyanat- und Aminogruppen beim Erkalten des Polyurethanpolymers wieder miteinander zu sterisch gehinderten Harnstoffgruppen reagieren. Dieses Reaktionsverhalten kann nun einerseits zum Lösen bestehender Klebeverbindungen genutzt werden, andererseits auch dazu, den Klebstoff, bzw. die Klebstoffraupe gelöster Klebeverbindungen, für eine erneute Verklebung zu nutzen.

Ausschlaggebend für das Funktionieren eines derartigen Systems ist ein Strukturelement enthaltend sterisch gehinderte Harnstoffgruppen, in welchen eines der Stickstoffatome - jenes, welches beim Aufbau der Harnstoffgruppe aus Polyisocyanat und sterisch gehindertem Amin von einer Aminogruppe stammt - zu mindestens einer sterisch anspruchsvollen Gruppe gebunden ist, wobei diese Gruppe im Polymergerüst eine Seitenkette darstellen oder Teil der Hauptkette sein kann.

Die thermische Labilität der C-N-Bindung in der sterisch gehinderten Harnstoffgruppe wird zusätzlich begünstigt im Fall, dass die Harnstoffgruppe auch von Seiten des anderen Stickstoffatoms - jenes, welches beim Aufbau der Harnstoffgruppe aus Polyisocyanat und sterisch gehindertem Amin von einer Isocyanatgruppe stammt - sterisch gehindert ist.

Im vorliegenden Dokument wird als "primäres Kohlenstoffatom" ein C-Atom verstanden, welches nur mit einem einzigen weiteren Kohlenstoffatom verbunden ist. Als "sekundäres Kohlenstoffatom" wird ein C-Atom verstanden, welches innerhalb eines Moleküls mit zwei weiteren Kohlenstoffatomen verbunden ist. Als "tertiäres Kohlenstoffatom" wird ein C-Atom verstanden, welches innerhalb eines Moleküls mit drei weiteren Kohlenstoffatomen verbunden ist, und als "quaternäres Kohlenstoffatom" wird ein C-Atom verstanden, welches innerhalb eines Moleküls mit vier weiteren Kohlenstoffatomen verbunden ist.

Als "primäre Aminogruppe" wird im vorliegenden Dokument eine NH₂-Gruppe bezeichnet, die an einen organischen Rest gebunden ist, und als "sekundäre Aminogruppe" wird eine NH-Gruppe bezeichnet, die an zwei organische Reste, welche auch gemeinsam Teil eines Rings sein können, gebunden ist.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst Polymere, welche nach dem so genannten Diisocyanat-Polyadditions-Verfahren hergestellt werden und zwei oder mehr Urethangruppen pro Molekül enthalten.

Die gestrichelten Linien in den Formeln in diesem Dokument stellen jeweils die Bindung zwischen einem Substituenten, beziehungsweise zwischen einem Strukturelement, und dem zugehörigen Molekülrest dar.

Insbesondere geht die vorliegende Erfindung aus von einem Polyurethanpolymer P enthaltend mindestens ein Strukturelement der Formel (I). 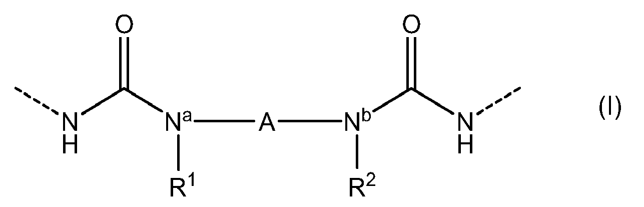 Dabei stehen N^{a} und N^{b} für Stickstoffatome.
Der Rest R¹ steht entweder
für einen einwertigen Kohlenwasserstoffrest mit 1 bis 10 C-Atomen, welcher über ein sekundäres oder tertiäres C-Atom zu N^{a} gebunden ist;
oder
zusammen mit R² für einen zweiwertigen Kohlenwasserstoffrest mit 2 bis 20 C-Atomen, welcher über ein sekundäres oder tertiäres C-Atom zu N^{a} gebunden ist, mit der Massgabe, dass A in diesem Fall über ein sekundäres oder tertiäres C-Atom zu N^{b} gebunden ist;
oder
zusammen mit A für einen dreiwertigen Kohlenwasserstoffrest mit 5 bis 30 C-Atomen, welcher jeweils über mindestens ein sekundäres oder tertiäres C-Atom zu N^{a} und zu N^{b} gebunden ist, mit der Massgabe, dass das zu N^{b} gebundene C-Atom tertiär ist, falls R² für H steht;
oder
zusammen mit A und R² für einen vierwertigen Kohlenwasserstoffrest mit 8 bis 30 C-Atomen, welcher jeweils über mindestens ein sekundäres oder tertiäres C-Atom zu N^{a} und zu N^{b} gebunden ist;
oder
für ein Wasserstoffatom, mit der Massgabe, dass A für einen zweiwertigen Kohlenwasserstoffrest steht, welcher über ein tertiäres C-Atom zu N^{a} gebunden ist.
Der Rest R² steht entweder
für einen einwertigen Kohlenwasserstoffrest mit 1 bis 10 C-Atomen, welcher über ein sekundäres oder tertiäres C-Atom zu N^{b} gebunden ist;
oder
zusammen mit R¹ für einen zweiwertigen Kohlenwasserstoffrest mit 2 bis 20 C-Atomen, welcher über ein sekundäres oder tertiäres C-Atom zu N^{b} gebunden ist, mit der Massgabe, dass in diesem Fall A über ein sekundäres oder tertiäres C-Atom zu N^{a} gebunden ist;
oder
zusammen mit A für einen dreiwertigen Kohlenwasserstoffrest mit 5 bis 30 C-Atomen, welcher jeweils über mindestens ein sekundäres oder tertiäres C-Atom zu N^{a} und zu N^{b} gebunden ist, mit der Massgabe, dass das zu N^{a} gebundene C-Atom tertiär ist, falls R¹ für H steht;
oder
zusammen mit A und R¹ für einen vierwertigen Kohlenwasserstoffrest mit 8 bis 30 C-Atomen, welcher jeweils über mindestens ein sekundäres oder tertiäres C-Atom zu N^{a} und zu N^{b} gebunden ist;
oder
für ein Wasserstoffatom, mit der Massgabe, dass A in diesem Fall für einen zweiwertigen Kohlenwasserstoffrest steht, welcher über ein tertiäres C-Atom zu N^{b} gebunden ist.
Weiterhin steht A entweder
für einen zweiwertigen Kohlenwasserstoffrest mit 2 bis 20 C-Atomen, welcher jeweils über ein sekundäres oder tertiäres C-Atom zu N^{a} und zu N^{b} gebunden ist, mit der Massgabe, dass das zu N^{a} gebundene C-Atom tertiär ist, falls R¹ für H steht, und mit der Massgabe, dass das zu N^{b} gebundene C-Atom tertiär ist, falls R² für H steht;
oder
zusammen mit R¹ für einen dreiwertigen Kohlenwasserstoffrest mit 5 bis 30 C-Atomen, welcher jeweils über mindestens ein sekundäres oder tertiäres C-Atom zu N^{a} und zu N^{b} gebunden ist, mit der Massgabe, dass das zu N^{b} gebundene C-Atom tertiär ist, falls R² für H steht;
oder
zusammen mit R² für einen dreiwertigen Kohlenwasserstoffrest mit 5 bis 30 C-Atomen, welcher jeweils über mindestens ein sekundäres oder tertiäres C-Atom zu N^{a} und zu N^{b} gebunden ist, mit der Massgabe, dass das zu N^{a} gebundene C-Atom tertiär ist, falls R¹ für H steht;
oder
zusammen mit R¹ und R² für einen vierwertigen Kohlenwasserstoffrest mit 8 bis 30 C-Atomen, welcher jeweils über ein sekundäres oder tertiäres C-Atom zu N^{a} und zu N^{b} gebunden ist.

Die Kohlenwasserstoffreste in A, R¹ und R² enthalten gegebenenfalls Heteroatome, wobei diese weder zu N^{a} noch zu N^{b} in α-Position stehen.

Beispielsweise sind Strukturelemente der Formel (I) dargestellt in den Formeln (Ia) bis (Ie), wobei die Reste R¹, R² und A jeweils mit einer gepunkteten Linie eingezeichnet und angeschrieben sind.

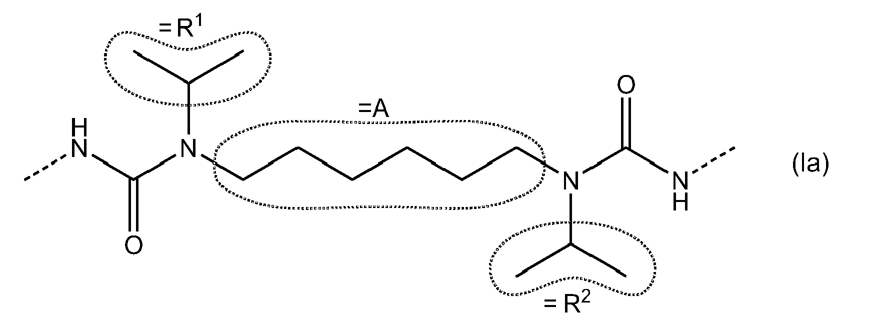

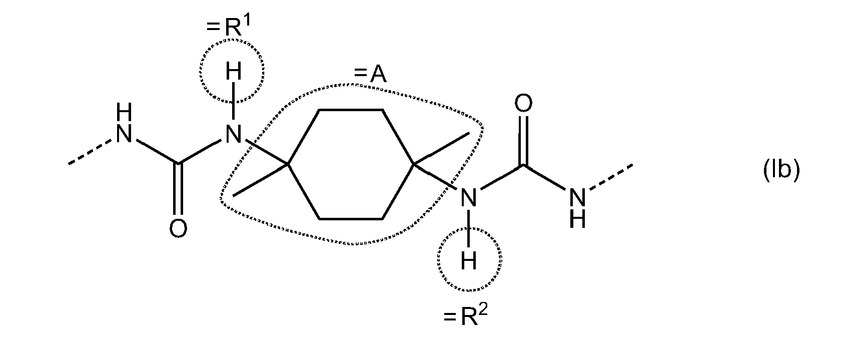

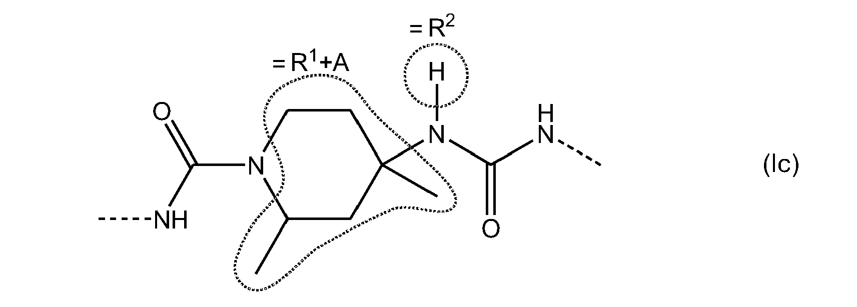

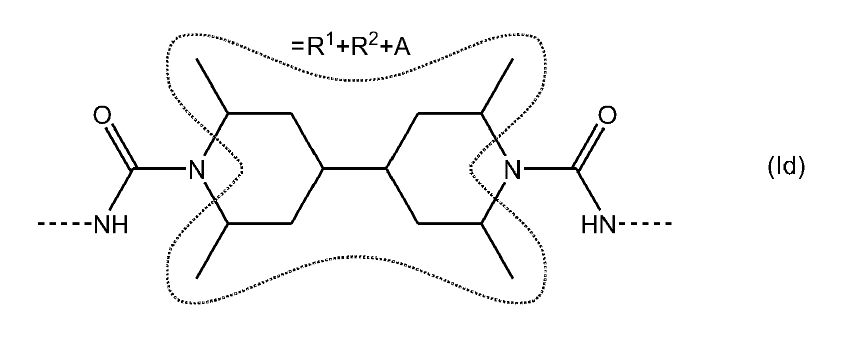

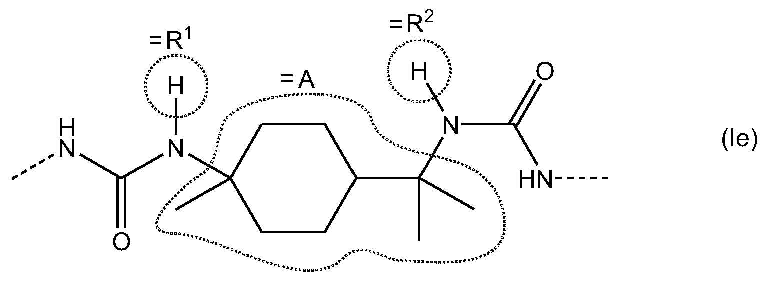

Vorzugsweise weist das Polyurethanpolymer **P**, wie es vorhergehend beschrieben wurde, zusätzlich mindestens ein Strukturelement der Formel (XII) und/oder der Formel (XVI) und/oder der Formel (XIII) auf.

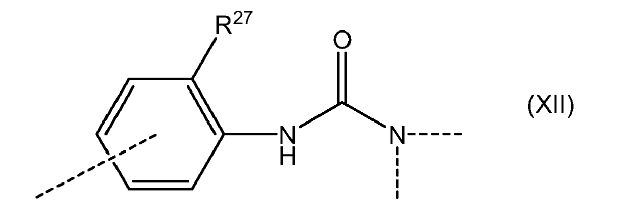

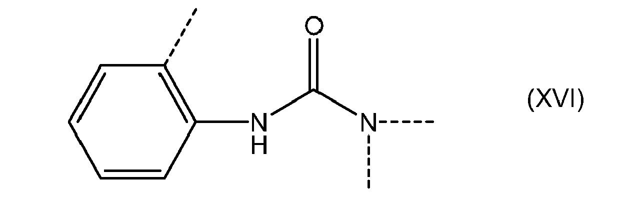

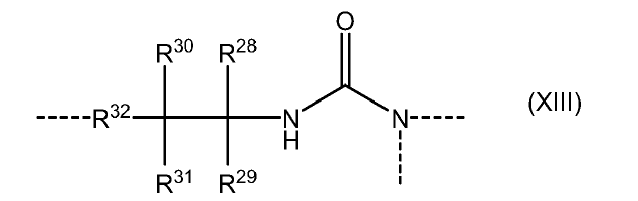

Dabei steht der Rest R²⁷ für einen Kohlenwasserstoffrest, insbesondere für einen Kohlenwasserstoffrest mit 1 bis 4 C-Atomen.

Der Rest R²⁸ steht für ein Wasserstoffatom; oder für einen einwertigen Kohlenwasserstoffrest mit 1 bis 4 C-Atomen; oder zusammen mit R²⁹ oder mit R³⁰ für einen zweiwertigen Kohlenwasserstoffrest mit 3 bis 8 C-Atomen, der Teil eines, gegebenenfalls substituierten, Rings mit 5 bis 8, insbesondere mit 6, C-Atomen ist.

Der Rest R²⁹ steht für ein Wasserstoffatom; oder für einen einwertigen Kohlenwasserstoffrest mit 1 bis 4 C-Atomen; oder zusammen mit R²⁸ für einen zweiwertigen Kohlenwasserstoffrest mit 4 bis 8 C-Atomen, der Teil eines, gegebenenfalls substituierten, Rings mit 5 bis 8, insbesondere mit 6, C-Atomen ist.

Der Rest R³⁰ steht für einen einwertigen Kohlenwasserstoffrest mit 1 bis 4 C-Atomen; oder zusammen mit R³¹ für einen zweiwertigen Kohlenwasserstoffrest mit 4 bis 8 C-Atomen, der Teil eines, gegebenenfalls substituierten, Rings mit 5 bis 8, insbesondere mit 6, C-Atomen ist; oder zusammen mit R³² für einen dreiwertigen Kohlenwasserstoffrest mit 4 bis 12 C-Atomen, der Teil eines, gegebenenfalls substituierten Rings mit 5 bis 8, insbesondere mit 6, C-Atomen ist; oder unter der Voraussetzung, dass R²⁸ und R²⁹ nicht beide für ein Wasserstoffatom stehen, für ein Wasserstoffatom.

Der Rest R³¹ steht für einen einwertigen Kohlenwasserstoffrest mit 1 bis 4 C-Atomen; oder zusammen mit R³⁰ für einen zweiwertigen Kohlenwasserstoffrest mit 4 bis 8 C-Atomen, der Teil eines, gegebenenfalls substituierten, Rings mit 5 bis 8, insbesondere mit 6, C-Atomen ist; oder zusammen mit R³² für einen dreiwertigen Kohlenwasserstoffrest mit 4 bis 12 C-Atomen, der Teil eines, gegebenenfalls substituierten Rings mit 5 bis 8, insbesondere mit 6, C-Atomen ist; oder unter der Voraussetzung, dass R²⁸ und R²⁹ nicht beide für ein Wasserstoffatom stehen, für ein Wasserstoffatom.

Der Rest R³² steht für ein einen zweiwertigen Kohlenwasserstoffrest mit 1 bis 8 C-Atomen; oder zusammen mit R³⁰ für einen dreiwertigen Kohlenwasserstoffrest mit 4 bis 12 C-Atomen, der Teil eines, gegebenenfalls substituierten, Rings mit 5 bis 8, insbesondere mit 6, C-Atomen ist.

Beispielsweise werden Strukturelemente der Formeln (XII), (XVI) und (XIII) durch den Einbau von Diisocyanaten wie 1-Isocyanato-3,3,5-trimethyl-5-isocyanatomethyl-cyclohexan (= Isophorondiisocyanat oder IPDI), 2,4- und 2,6-Toluylendiisocyanat (2,4-TDI und 2,6-TDI), 2,2'- und 2,4'-Diphenylmethandiisocyanat (2,2'-MDI und 2,4'-MDI), 2,2,4- und 2,4,4-Trimethyl-1,6-diisocyanatohexan (TMDI) und m-Tetramethylxylylendiisocyanat (TMXDI) in das Polymergerüst erhalten.

Derartige Strukturelemente weisen dann beispielsweise ein Strukturelement der Formel (XIX) und/oder der Formel (XX) und/oder der Formel (XXI) auf.

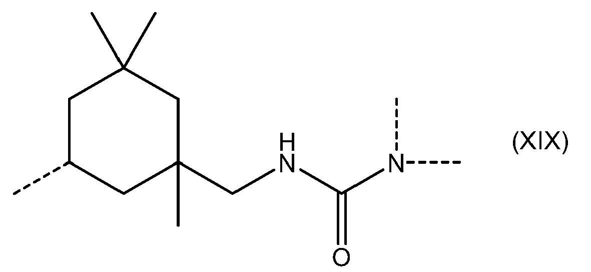

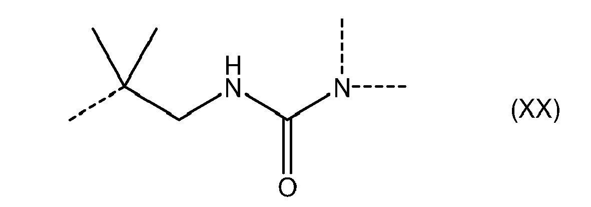

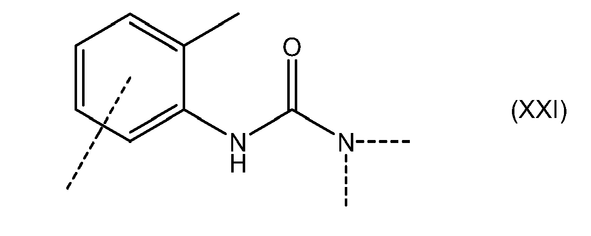

In einem zweiten Aspekt betrifft die vorliegende Erfindung eine Zusammensetzung zur Herstellung eines Polyurethanpolymers P, wie es vorhergehend beschrieben wurde, umfassend mindestens ein Polyisocyanat, mindestens ein Polyol sowie mindestens ein Diamin der Formel (III) 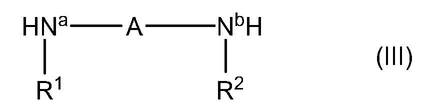 und/oder mindestens ein Dienamin der Formel (V) und/oder ein Diimin der Formel (VI) und/oder ein Iminoenamin der Formel (XVIII).

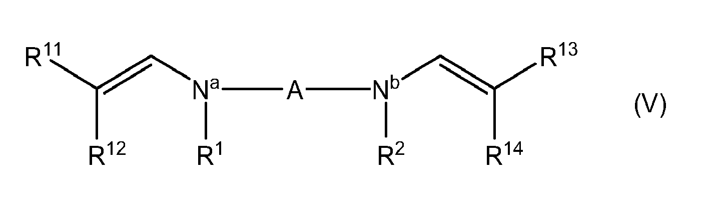

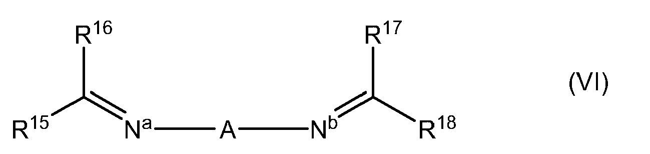

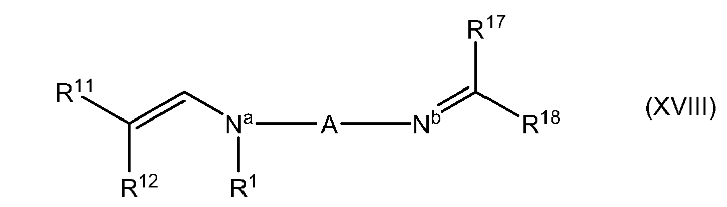

Dabei weisen N^{a}, N^{b}, A, R¹ und R² die vorhergehend beschriebenen Bedeutungen auf.

Die Reste R¹¹ und R¹² sowie R¹³ und R¹⁴ sowie R¹⁵ und R¹⁶ sowie R¹⁷ und R¹⁸ stehen unabhängig voneinander entweder jeweils für ein Wasserstoffatom oder für einen einwertigen Kohlenwasserstoffrest mit 1 bis 34 C-Atomen, oder paarweise je für einen zweiwertigen Kohlenwasserstoffrest mit 4 bis 20, insbesondere mit 6 bis 12, C-Atomen, der Teil eines, gegebenenfalls substituierten und/oder mindestens ein Heteroatom aufweisenden Rings mit 5 bis 8, insbesondere mit 6, C-Atomen ist.

Bevorzugt stehen die Reste R¹⁵ und R¹⁷ jeweils für ein Wasserstoffatom.

Weiterhin bevorzugt stehen die Reste R¹¹, R¹² R¹³ R¹⁴ R¹⁶ und R¹⁸ unabhängig voneinander jeweils für einen einwertigen Kohlenwasserstoffrest mit 1 bis 20, insbesondere mit 1 bis 6, C-Atomen.

Besonders bevorzugt stehen die Reste R¹⁶ und R¹⁸ unabhängig voneinander jeweils für einen Rest der Formel (VII) oder (VIII).

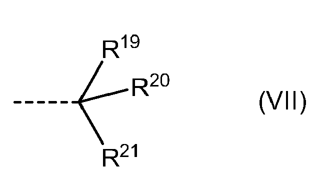

-----R²² (VIII)

Der Rest R¹⁹ steht dabei für einen linearen oder verzweigten Kohlenwasserstoffrest mit 1 bis 31 C-Atomen, gegebenenfalls mit cyclischen und/oder aromatischen Anteilen und gegebenenfalls mit mindestens einem Heteroatom, insbesondere Sauerstoff in Form von Ether-, Ester- oder Aldehydgruppen.

Die Reste R²⁰ und R²¹ stehen unabhängig voneinander entweder jeweils für einen einwertigen Kohlenwasserstoffrest mit 1 bis 12 C-Atomen, oder paarweise je für einen zweiwertigen Kohlenwasserstoffrest mit 4 bis 20 C-Atomen, der Teil eines, gegebenenfalls substituierten, Rings mit 5 bis 8, insbesondere mit 6, C-Atomen ist. Bevorzugt stehen die Reste R²⁰ und R²¹ je für eine Methylgruppe.

Der Rest R²² steht für eine substituierte oder unsubstituierte Aryl- oder Heteroaryl-Gruppe, welche eine Ringgrösse von 5 bis 8, bevorzugt 6, Atomen aufweist oder für einen Rest der Formel (IX).

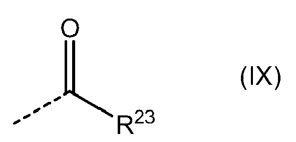

Dabei steht der Rest R²³ für ein Wasserstoffatom oder für eine Alkoxygruppe mit 1 bis 20, insbesondere 1 bis 6, C-Atomen oder für eine substituierte oder unsubstituierte Alkenyl- oder Arylalkenylgruppe mit 6 bis 20, insbesondere 6 bis 12, C-Atomen.

Insbesondere steht der Rest R¹⁹ jeweils für einen Rest der Formel (X) oder (XI).

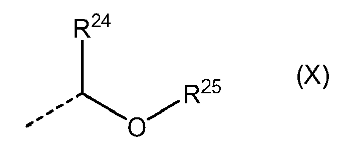

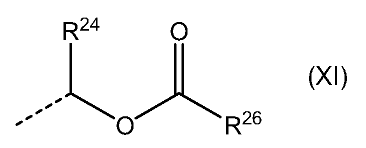

Der Rest R²⁴ steht dabei für ein Wasserstoffatom oder für eine Alkyl- oder für eine Cycloalkyl- oder für eine Arylalkylgruppe, insbesondere für ein Wasserstoffatom. Die Alkyl-, Cycloalkyl- oder Arylalkylgruppe weist insbesondere 1 bis 12 C-Atome auf.

Der Rest R²⁵ steht für einen Kohlenwasserstoffrest mit 1 bis 30, insbesondere mit 11 bis 30, C-Atomen, der gegebenenfalls Heteroatome aufweist.

Der Rest R²⁶ steht entweder für ein Wasserstoffatom; oder für einen linearen oder verzweigten Kohlenwasserstoffrest mit 1 bis 29, insbesondere mit 11 bis 29, C-Atomen, gegebenenfalls mit cyclischen Anteilen und/oder gegebenenfalls mit mindestens einem Heteroatom; oder für einen einfach oder mehrfach ungesättigten, linearen oder verzweigten Kohlenwasserstoffrest mit 5 bis 29 C-Atomen; oder für einen, gegebenenfalls substituierten, aromatischen oder heteroaromatischen 5- oder 6-gliedrigen Ring.

Meist bevorzugt stehen die Reste R¹⁶ und R¹⁸ unabhängig voneinander jeweils für einen Rest der Formel (VII).

Die Zusammensetzung zur Herstellung eines Polyurethanpolymers P kann dabei als einkomponentige oder als zweikomponentige Zusammensetzung eingesetzt werden.

Als "einkomponentige Zusammensetzung" wird im vorliegenden Dokument eine härtbare Zusammensetzung bezeichnet, deren Bestandteile in vermischter Form im gleichen Gebinde gelagert werden, und welche bei Raumtemperatur über einen längeren Zeitraum lagerstabil ist, sich also in ihren Anwendungs- oder Gebrauchseigenschaften durch die Lagerung nicht oder nur unwesentlich verändert, und welche nach der Applikation durch die Einwirkung von Feuchtigkeit aushärtet.

Als "zweikomponentige Zusammensetzung" wird im vorliegenden Dokument eine härtbare Zusammensetzung bezeichnet, deren Bestandteile in zwei verschiedenen Komponenten vorliegen, die in voneinander getrennten Gebinden gelagert werden und jeweils für sich lagerstabil sind. Erst kurz vor oder während der Applikation der Zusammensetzung werden die beiden Komponenten miteinander vermischt, worauf die vermischte Zusammensetzung aushärtet, wobei die Aushärtung unter Umständen erst durch die Einwirkung von Feuchtigkeit abläuft oder vervollständigt wird.

Einkomponentige Zusammensetzungen weisen den Vorteil auf, dass sie ohne Mischvorgang applizierbar sind, während zweikomponentige Zusammensetzungen den Vorteil aufweisen, dass sie rascher aushärten und als Bestandteile Substanzen enthalten können, welche zusammen mit Isocyanaten nicht lagerfähig sind.

In einer bevorzugten Ausführungsform ist die Zusammensetzung zur Herstellung eines Polyurethanpolymers **P** eine einkomponentige Zusammensetzung umfassend
a) mindestens ein Isocyanatgruppen aufweisendes Polyurethanpolymer **P1,** welches hergestellt ist aus
   i) mindestens einem Polyisocyanat,
   ii) mindestens einem Polyol und
   iii) mindestens einem Diamin der Formel (III);
   oder
b) mindestens ein Isocyanatgruppen aufweisendes Polyurethanpolymer **P2,** welches hergestellt ist aus
   i') mindestens einem Polyisocyanat und
   ii') mindestens einem Polyol;
   sowie mindestens ein Dienamin der Formel (V) und/oder ein Diimin der Formel (VI) und/oder ein Iminoenamin der Formel (XVIII).

In einer weiteren bevorzugten Ausführungsform ist die Zusammensetzung zur Herstellung eines Polyurethanpolymers **P** eine zweikomponentige Zusammensetzung umfassend
a') eine erste Komponente **K1** umfassend mindestens ein Polyisocyanat und/oder mindestens ein Isocyanatgruppen aufweisendes Polyurethanpolymer **P2,** welches hergestellt ist aus
   i") mindestens einem Polyisocyanat und
   ii") mindestens einem Polyol;
      sowie
b') eine zweite Komponente **K2** umfassend mindestens ein Diamin der Formel (III).

Gegebenenfalls umfasst die zweite Komponente **K2** neben mindestens einem Diamin der Formel (III) zusätzlich mindestens ein Polyol.

Besonders bevorzugte Diamine der Formel (III) sind aliphatische und cycloaliphatische Diamine, insbesondere solche, welche ausgewählt sind aus der Gruppe bestehend aus N,N'-Di-*tert*.-butylhexyl-1,6-diamin, N,N'-Dicyclohexylhexyl-1,6-diamin, N,N'-Diisopropylhexyl-1,6-diamin, N,N'-Bis(2-nitropropan-2-yl)hexyl-1,6-diamin, 1,8-Menthandiamin, N-Isopropyl-3-((isopropylamino)methyl)-3,5,5-trimethylcyclohexylamin, N-(1,2-Dimethylpropyl)-3-((1,2-dimethylpropylamino)methyl)-3,5,5-trimethylcyclohexylamin, N-(1,3-Dimethylbutyl)-3-((1,3-dimethylbutylamino)methyl)-3,5,5-trimethylcyclohexylamin, 2,2',6,6'-Tetramethyl-4,4'-bipiperidin, 1,4-Dimethylcyclohexyl-1,4-diamin und 2,4-Dimethyl-4-methylaminopiperidin.

Besonders bevorzugte Diamine der Formel (III) sind 1,8-Menthandiamin und N-Isopropyl-3-((isopropylamino)methyl)-3,5,5-trimethylcyclohexylamin.

Das Dienamin der Formel (V) lässt sich beispielsweise durch eine Kondensationsreaktion zwischen mindestens einem Diamin der Formel (III), welches primäre oder sekundäre Aminogruppen aufweist, und mindestens einem Aldehyd der Formel (XXII) bzw. der Formel (XXIII) herstellen, wobei das bevorzugte stöchiometrische Verhältnis des Diamins zum Aldehyd 1:2 beträgt.

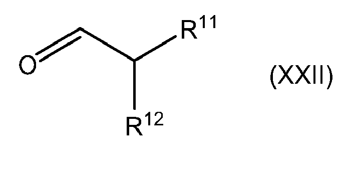

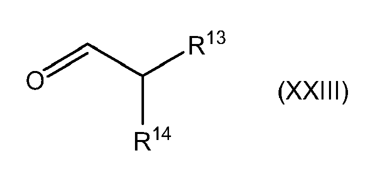

Beim Diimin der Formel (VI) handelt es sich um ein Diketimin bzw. um ein Dialdimin, welches sich beispielsweise durch eine Kondensationsreaktion zwischen mindestens einem Diamin der Formel (III), wobei dieses für diese Umsetzung zwei primäre Aminogruppen aufweist, und mindestens einem Keton bzw. einem Aldehyd der Formel (XXIV) bzw. der Formel (XXV) herstellen lässt. Das bevorzugte stöchiometrische Verhältnis des Diamins zum Keton bzw. zum Aldehyd beträgt 1:2.

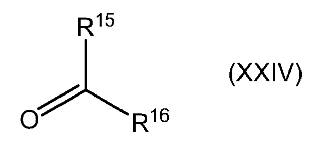

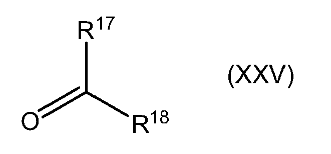

Das Iminoenamin der Formel (XVIII) lässt sich beispielsweise herstellen durch eine Kondensationsreaktion mindestens eines Diamins der Formel (III), wobei dieses für diese Umsetzung mindestens eine primäre Aminogruppen aufweist, mit je mindestens einem Aldehyd der Formel (XXII) und mindestens einem Keton bzw. Aldehyd der Formel (XXV). Das bevorzugte stöchiometrische Verhältnis des Diamins zum Aldehyd der Formel (XXII) und zum Keton bzw. Aldehyd der Formel (XXV) beträgt 1:1:1.

Die Reste R¹¹, R¹², R¹³ und R¹⁴ sowie R¹⁵, R¹⁶, R¹⁷ und R¹⁸ sind vorhergehend bereits beschrieben worden.

Geeignete Aldehyde der Formeln (XXII) und (XXIII) sind beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd und Diphenylacetaldehyd.

Geeignete Ketone der Formeln (XXIV) und (XXV) sind beispielsweise Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon und Actetophenon.

Geeignete Aldehyde der Formeln (XXIV) und (XXV) sind beispielsweise Formaldehyd, Acetaldehyd sowie die als geeignet für Aldehyde der Formeln (XXII) und (XXIII) genannten Aldehyde.

Geeignete Aldehyde der Formeln (XXIV) und (XXV), wobei die Reste R¹⁶ bzw. R¹⁸ für Reste der Formel (VIII) stehen, sind aromatische Aldehyde, wie beispielsweise Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.

Weiterhin geeignete Aldehyde der Formeln (XXIV) und (XXV), wobei die Reste R¹⁶ bzw. R¹⁸ für Reste der Formel (VII) stehen, sind tertiäre aliphatische Aldehyde, wie beispielsweise Pivalaldehyd (= 2,2-Dimethylpropanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Besonders geeignete Aldehyde der Formeln (XXIV) und (XXV), wobei die Reste R¹⁶ bzw. R¹⁸ für Reste der Formel (VII) stehen und der Rest R¹⁹ für einen Rest der Formel (X) steht, sind beispielsweise Ether von aliphatischen, cycloaliphatischen oder arylaliphatischen 2,2-disubstituierten 3-Hydroxyaldehyden mit Alkoholen oder Phenolen der Formel R²⁵-OH dar, beispielsweise Fettalkoholen oder Phenolen. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären cycloaliphatischen oder sekundären arylaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd. Beispiele geeigneter 2,2-disubstituierter 3-Hydroxyaldehyde sind 2,2-Dimethyl-3-hydroxypropanal, 2-Hydroxymethyl-2-methylbutanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal. Beispielsweise sind derartige Aldehyde 2,2-Dimethyl-3-phenoxy-propanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

Weitere besonders geeignete Aldehyde der Formeln (XXIV) und (XXV), wobei die Reste R¹⁶ bzw. R¹⁸ für Reste der Formel (VII) stehen und der Rest R¹⁹ für einen Rest der Formel (XI) steht, sind beispielsweise Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit Carbonsäuren wie Ameisensäure, Essigsäure, Propionsäure, Buttersäure, Isobuttersäure, Valeriansäure und Capronsäure. Als Beispiele solcher Aldehyde genannt sind 2,2-Dimethyl-3-formyloxy-propanal, 3-Acetoxy-2,2-dimethylpropanal, 2,2-Dimethyl-3-propionoxypropanal, 3-Butyroxy-2,2-dimethyl-propanal, 2,2-Dimethyl-3-isobutyroxy-propanal, 2,2-Dimethyl-3-pentoyloxy-propanal und 2,2-Dimethyl-3-hexoyloxy-propanal.

Bevorzugte Aldehyde sind jene der Formeln (XXIV) und (XXV), wobei die Reste R¹⁶ bzw. R¹⁸ für Reste der Formel (VII) stehen und der Rest R¹⁹ für einen Rest der Formel (X) oder insbesondere für einen Rest der Formel (XI) steht.

Die Kondensationsreaktionen des Dienamins der Formel (V), des Diimins der Formel (VI) und des Iminoenamins der Formel (XVIII) verlaufen reversibel, so dass unter Einfluss von Wasser die entsprechenden Rückreaktionen zu den Ausgangsprodukten stattfinden.

Die Reaktivität der Enamino- und der Iminogruppen gegenüber Wasser, das heisst die Geschwindigkeit der Hydrolysereaktion und somit die Geschwindigkeit der Aushärtung der feuchtigkeitshärtenden Zusammensetzung zur Herstellung eines Polyurethanpolymers **P** bei der erstmaligen Aushärtung, ist abhängig von den Substituenten der vorhergehen beschriebenen Aldehyde und Ketone. Weisen diese sterisch anspruchsvolle Substituenten auf, verläuft die Hydrolysereaktion in der Regel langsamer. Dadurch lässt sich durch die Wahl der jeweiligen Substituenten R¹¹, R¹² R¹³ und R¹⁴ bzw. R¹⁵, R¹⁶, R¹⁷ und R¹⁸ die Aushärtungsgeschwindigkeit der Zusammensetzung bei der ersten Anwendung beeinflussen.

Weiterhin ist bei der Wahl der Aldehyde und Ketone der Formeln (XXII) bis (XXV) zu beachten, dass diese bei der ersten Aushärtung der Zusammensetzung wieder frei werden und unerwünschte Eigenschaften aufweisen können. So sind beispielsweise abhängig vom Einsatzgebiet der Zusammensetzung Aldehyde und Ketone bevorzugt, welche nicht nur vor, während und nach der Aushärtung, sondern auch beim Lösen der Klebeverbindung durch Temperatureinfluss geruchsfrei sind. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist. Derartige geruchsfreie Aldehyde und Ketone sind insbesondere solche, bei welchen die Reste R¹⁶ und R¹⁸ für einen Rest der Formel (VII) stehen. Als Beispiele geruchsfreier Aldehyde der Formel (XXV) genannt sind 2,2-Dimethyl-3-lauroyloxy-propanal und 2,2-Dimethyl-3-stearoyloxympropanal.

Das Polyurethanpolymer **P1** wird hergestellt aus mindestens einem Polyisocyanat, mindestens einem Polyol und mindestens einem Diamin der Formel (III).

Das Polyurethanpolymer **P2** wird hergestellt aus mindestens einem Polyisocyanat und mindestens einem Polyol.

Geeignete Polyisocyanate sind insbesondere Di- und Triisocyanate.

Geeignete Diisocyanate sind aliphatische, cycloaliphatische, aromatische oder arylaliphatische Diisocyanate, insbesondere handelsübliche Produkte wie 4,4'-, 2,4'- und 2,2'-Diphenylmethandiisocyanat (4,4'-, 2,4'- und 2,2'-MDI), 2,4- und 2,6-Toluylendiisocyanat (2,4- und 2,6-TDI), Tolidindiisocyanat (TODI), 1,5-Naphthalindiisocyanat (NDI), p-Phenylendiisocyanat (PPDI), 1-Isocyanato-3,3,5-trimethyl-5-isocyanatomethyl-cyclohexan (= Isophorondiisocyanat oder IPDI), Dicyclohexylmethyldiisocyanat (H₁₂MDI), 2,5- oder 2,6-Bis-(isocyanatomethyl)-bicyclo[2.2.1]heptan, m-Tetramethylxylylendiisocyanat (TMXDI), 2,2,4- und 2,4,4-Trimethyl-1,6-diisocyanatohexan (TMDI), Hexamethylendiisocyanat (HDI), etc. sowie deren Dimere.

Geeignete Triisocyanate sind Trimere, Allophanate oder Biurete von aliphatischen, cycloaliphatischen, aromatischen oder arylaliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Besonders bevorzugte Polyisocyanate sind Diisocyanate, welche mindestens ein Strukturelement der Formel (XIV) und/oder der Formel (XVII) und/oder der Formel (XV) aufweisen.

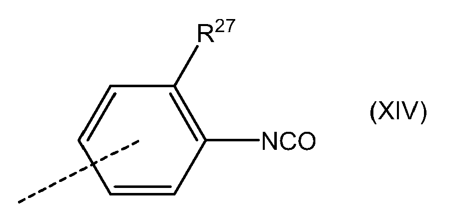

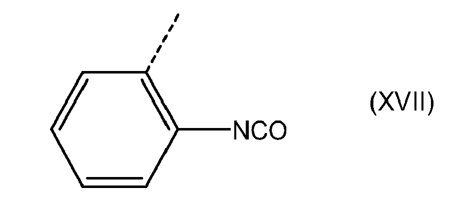

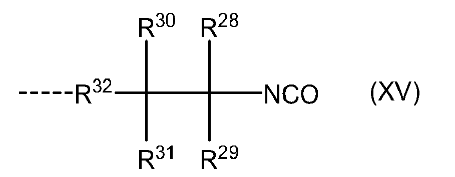

Die Reste R²⁷ bis R³² sind vorhergehend bereits beschrieben worden.

Diisocyanate enthaltend mindestens ein Strukturelement der Formel (XIV) und/oder der Formel (XV) sind beispielsweise 2,2'- und 2,4'-MDI, 2,4- und 2,6-TDI, IPDI, TMDXI und TMDI.

Für die Herstellung des Polymers **P** bzw. der Polyurethanpolymere **P1** und **P2** geeignete Polyole sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Unter "Molekulargewicht" versteht man im vorliegenden Dokument stets das Molekulargewichtsmittel Mn.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar^{®} CTBN von der Firma Emerald Performance Materials, LLC, USA) hergestellt werden können.

Diese genannten Polyole weisen bevorzugt ein mittleres Molekulargewicht von 250 bis 30'000 g/mol, insbesondere von 1'000 bis 30'000 g/mol, und weisen bevorzugt eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung der Polyurethanpolymere **P1** und **P2** mitverwendet werden.

Vorzugsweise enthält die Zusammensetzung weiterhin einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearaten, beschichtet sind, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Bariumsulfat und Calciumcarbonate, Russ sowie flammhemmende Füllstoffe wie Hydroxide oder Hydrate, insbesondere Hydroxide oder Hydrate von Aluminium, bevorzugt Aluminiumhydroxid. Bevorzugte Füllstoffe sind Russ oder Kreide.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, bevorzugt 20 bis 60 Gew.-%, bezogen auf die gesamte Zusammensetzung.

Die Zusammensetzung kann ein Lösungsmittel enthalten, oder auch nicht. Enthält die Zusammensetzung ein Lösungsmittel, ist darauf zu achten, dass dieses Lösungsmittel keine mit Isocyanatgruppen reaktive Gruppen aufweist, insbesondere keine Hydroxylgruppen und keine anderen Gruppen mit aktivem Wasserstoff.

Geeignete Lösungsmittel sind insbesondere ausgewählt aus der Gruppe bestehend aus Ketonen wie Aceton, Methylethylketon, Diisobutylketon, Acetylaceton, Mesityloxid, Cyclohexanon und Methylcyclohexanon; Ester, beispielsweise Acetate wie Ethylacetat, Propylacetat und Butylacetat, Formiate, Propionate und Malonate wie Diethylmalonat; Ether wie Dialkylether, Ketonether und Esterether, beispielsweise Diisopropylether, Diethylether, Dibutylether, Diethylenglykoldiethylether und Ethylenglykoldiethylether; aliphatische und aromatische Kohlenwasserstoffe wie Toluol, Xylol, Heptan, Octan und Erdölfraktionen wie Naphtha, White Spirit, Petrolether und Benzin; halogenierte Kohlenwasserstoffe wie Methylenchlorid; sowie N-alkylierte Lactame, wie beispielsweise N-Methylpyrrolidon.

Bevorzugt sind Xylol, Toluol, White Spirit und Erdölfraktionen im Siedebereich von 100 °C bis 200 °C.

Geeignete Mengen Lösungsmittel liegen typischerweise im Bereich von 1 bis 50 Gew.-%, insbesondere 1 bis 25 Gew.-%, bezogen auf die gesamte Zusammensetzung.

In der Zusammensetzung können weitere Bestandteile vorhanden sein. Weitere Bestandteile sind insbesondere Hilfs- und Zusatzstoffe wie:
- Weichmacher, beispielsweise Ester organischer Carbonsäuren oder deren Anhydride, zum Beispiel Phthalate wie Dioctylphthalat, Diisononylphthalat oder Diisodecylphthalat, Adipate wie Dioctyladipat, Azelate und Sebacate; organische Phosphor- und Sulfonsäureester, Polybutene und Polyisobutene;
- Katalysatoren, wie sie in der Polyurethanchemie üblich sind, insbesondere Zinn- und Wismutverbindungen, tertiäre Amine, organische Carbon- und Sulfonsäuren;
- Fasern, beispielsweise aus Polyethylen;
- Pigmente, beispielsweise Titandioxid oder Eisenoxide;
- Rheologie-Modifizierer wie beispielsweise Verdickungsmittel oder Thixotropierungsmittel, zum Beispiel Harnstoffverbindungen, Polyamidwachse, Bentonite oder pyrogene Kieselsäuren;
- Reaktivverdünner oder Vernetzer, beispielsweise niedrigmolekulare Oligomere und Derivate von Diisocyanaten wie MDI, PMDI, TDI, HDI, 1,12-Dodecamethylendiisocyanat, Cyclohexan-1,3-diisocyanat oder Cyclohexan-1,4-diisocyanat, IPDI, Perhydro-2,4'-diphenylmethandiisocyanat und Perhydro-4,4'-diphenylmethandiisocyanat, 1,3- und 1,4-Tetramethylxylylendiisocyanat, insbesondere Isocyanurate, Carbodiimide, Uretonimine, Biurete, Allophanate und Iminooxadiazindione der genannten Diisocyanate, Addukte von Diisocyanaten mit kurzkettigen Polyolen, Adipinsäuredihydrazid und andere Dihydrazide, sowie blockierte Amine in Form von Polyaldiminen, Polyketiminen, Oxazolidinen oder Polyoxazolidinen;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane, im Folgenden "Silane" genannt, wie beispielsweise Epoxysilane, Vinylsilane, (Meth)acrylsilane, Isocyanatosilane, Carbamatosilane, S-(Alkylcarbonyl)-mercaptosilane und Aldiminosilane, oligomere Formen dieser Silane, sowie Addukte von Aminosilanen und/oder Mercaptosilanen mit Polyisocyanaten;
- nicht-reaktive thermoplastische Polymere, wie beispielsweise Homo- oder Copolymere von ungesättigten Monomeren, insbesondere von ungesättigten Monomeren, welche ausgewählt sind aus der Gruppe umfassend Ethylen, Propylen, Butylen, Isobutylen, Isopren, Vinylacetat oder höhere Ester davon, und (Meth)acrylat, wobei Ethylenvinylacetat-Copolymere (EVA), ataktische Poly-α-Olefine (APAO), Polypropylene (PP) und Polyethylene (PE) besonders geeignet sind;
- reaktive thermoplastische Polymere, insbesondere Isocyanatgruppen terminierte Polyurethanpolymere, zu deren Herstellung Polyester-Polyole, vorzugsweise bei Raumtemperatur feste Polyester-Polyole, verwendet werden und die ihren Schmelzpunkt im Bereich der Applikationstemperatur der Zusammensetzung als Warmschmelzklebstoff, bevorzugt zwischen 40 °C und 80 °C, aufweisen;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide, wie beispielsweise Algizide, Fungizide oder das Pilzwachstum hemmende Substanzen;
sowie weitere, üblicherweise in Polyurethanzusammensetzungen eingesetzte Substanzen.

Weiterhin vorteilhaft enthält die Zusammensetzung mindestens einen Katalysator, welcher die Hydrolyse der Enaminogruppen und/oder der Iminogruppen sowie gegebenenfalls die Reaktion der Isocyanatgruppen beschleunigt.

Katalysatoren, welche die Hydrolyse des Dienamins und des Diimins bzw. des Iminoenamins beschleunigen, sind beispielsweise organische Carbonsäuren, wie Benzoesäure oder Salicylsäure, organische Carbonsäureanhydride, wie Phthalsäureanhydrid oder Hexahydrophthalsäureanhydrid, Silylester organischer Carbonsäuren, organische Sulfonsäuren wie p-Toluolsulfonsäure oder 4-Dodecylbenzolsulfonsäure, Sulfonsäureester, andere organische oder anorganische Säuren, oder Mischungen der vorgenannten Säuren und Säureester.

Katalysatoren, welche die Reaktion der Isocyanatgruppen mit Wasser beschleunigen, sind beispielsweise Organozinnverbindungen wie Dibutylzinn-dilaurat, Dibutylzinndichlorid, Dibutylzinndiacetat, Bismut-organische Verbindungen oder Bismut-Komplexe, oder tertiäre Amine wie beispielsweise 2,2'-Dimorpholinodiethylether oder 1,4-Diazabicyclo[2.2.2]octan, oder andere, in der Polyurethanchemie übliche, Katalysatoren für die Reaktion der Isocyanatgruppen.

Es kann vorteilhaft sein, wenn in der Polyurethanzusammensetzung eine Mischung aus mehreren Katalysatoren vorhanden ist, insbesondere ein Gemisch aus einer Säure und einer metallorganischen Verbindung oder einem Metallkomplex, aus einer Säure und einem tertiären Amin, oder ein Gemisch aus einer Säure, einer metallorganischen Verbindung oder einem Metallkomplex, und einem tertiären Amin.

Ein typischer Gehalt an Katalysator beträgt üblicherweise 0.005 bis 2 Gew.-%, bezogen auf die gesamte Zusammensetzung, wobei dem Fachmann klar ist, welche Einsatzmengen für welche Katalysatoren sinnvoll sind.

Es ist vorteilhaft, alle genannten, in der Zusammensetzung gegebenenfalls vorhandenen Bestandteile, insbesondere einen Füllstoff und einen Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Isocyanatgruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Es kann deshalb sinnvoll sein, gewisse Bestandteile vor dem Einmischen in die Zusammensetzung chemisch oder physikalisch zu trocknen.

Die beschriebene Zusammensetzung wird unter Ausschluss von Feuchtigkeit hergestellt und aufbewahrt. Die Zusammensetzung ist lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Die Aushärtung der einkomponentigen Zusammensetzung erfolgt durch Kontakt mit Wasser. Dabei verläuft die Aushärtungsreaktion unterschiedlich, je nachdem ob in der Zusammensetzung ein Isocyanatgruppen aufweisendes Polyurethanpolymer **P1** oder ein Isocyanatgruppen aufweisendes Polyurethanpolymer **P2** enthalten ist.

Im Fall einer einkomponentigen, feuchtigkeitshärtenden Zusammensetzung zur Herstellung eines Polyurethanpolymers **P**, umfassend ein Polyurethanpolymer **P1,** welches hergestellt ist aus mindestens einem Polyisocyanat, mindestens einem Polyol und mindestens einem Diamin der Formel (III), verläuft die Aushärtung über die Reaktion der Isocyanatgruppen mit dem Wasser, und es werden unter Abspaltung von Kohlendioxid Harnstoffgruppen gebildet.

Im Fall einer einkomponentigen, feuchtigkeitshärtenden Zusammensetzung zur Herstellung eines Polyurethanpolymers **P**, umfassend ein Polyurethanpolymer **P2,** welches hergestellt ist aus mindestens einem Polyisocyanat und mindestens einem Polyol, sowie mindestens einem so genannten latenten Härter in der Form eines Dienamins der Formel (V) und/oder eines Diimins der Formel (VI) und/oder eines Iminoenamins der Formel (XVIII), verläuft die Aushärtung, neben der Reaktion der Isocyanatgruppen mit Wasser, auch über die Hydrolyse der geschützten Aminogruppen und der anschliessenden Reaktion dieser mit den Isocyanatgruppen, wobei sich wiederum Harnstoffgruppen bilden. Bei dieser Hydrolyse werden Ketone und/oder Aldehyde der Formeln (XXII) und/oder (XXIII) freigesetzt. Die Reaktion der Isocyanatgruppen mit dem hydrolysierenden Dienamin bzw. mit dem Diimin oder mit dem Iminoenamin muss dabei nicht notwendigerweise über freie Aminogruppen erfolgen. Selbstverständlich sind auch Reaktionen von bei der Hydrolyse auftretenden Zwischenstufen möglich. Beispielsweise ist es denkbar, dass eine hydrolysierende Aldiminogruppe des Dialdimins der Formel (VI) in der Form einer Halbaminalgruppe direkt mit einer Isocyanatgruppe reagiert.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt; sie verlangsamt sich in der Regel mit dem Fortschreiten der Aushärtung.

Die Aushärtung der zweikomponentigen Zusammensetzung erfolgt einerseits durch die beim Mischen der beiden Komponenten **K1** und **K2** stattfindende Reaktion der Isocyanatgruppen des Polyurethanpolymers **P2,** welches sich in der Komponente **K1** befindet, mit den freien Aminogruppen des Diamins der Formel (III), welches sich in der Komponente **K2** befindet, unter Bildung sterisch gehinderter Harnstoffgruppen, sowie mit funktionellen Gruppen von optional in der Komponente **K2** vorhandenen weiteren gegenüber Isocyanaten reaktiven Bestandteilen, insbesondere mit OH-Gruppen von Polyolen. Andererseits verläuft die Aushärtung der Zusammensetzung zu Herstellung eines Polymers **P** auch bei einer zweikomponentigen Zusammensetzung zu einem gewissen Teil durch die Reaktion der Isocyanatgruppen des Polyurethanpolymers **P2** mit Wasser, wie sie bei der einkomponentigen, feuchtigkeitshärtenden Zusammensetzung beschrieben ist. Dies ist insbesondere der Fall, da die Isocyanatgruppen des Polyurethanpolymers **P2** gegenüber den Aminogruppen des Diamins der Formel (III) und optional vorhandenen weiteren funktionellen Gruppen, insbesondere OH-Gruppen, im Überschuss vorliegen.

In einem weiteren Aspekt umfasst die vorliegende Erfindung die Verwendung einer vorhergehend beschriebenen Zusammensetzung als Klebstoff, Dichtstoff und/oder als Beschichtung für Bau- und Industrieanwendungen, insbesondere als Klebstoff, Dichtstoff und als Bodenbeschichtung, bevorzugt als Klebstoff.

In einem weiteren Aspekt umfasst die vorliegende Erfindung ein Verfahren des Verklebens von Substraten **S1** und **S2,** welches in einer ersten Ausführungsform die Schritte umfasst
a1) Applizieren einer Zusammensetzung gemäss vorhergehender Beschreibung auf ein Substrat **S1** und/oder ein Substrat **S2;**
b1) Kontaktieren der Substrate **S1** und **S2** über die applizierte Zusammensetzung; und
c1) Aushärten der applizierten Zusammensetzung, insbesondere mittels Wasser;
wobei die Substrate **S1** und **S2** gleich oder verschieden voneinander sind.

In einer zweiten Ausführungsform umfasst das Verfahren des Verklebens von Substraten **S1** und **S2** die Schritte
a2) Applizieren einer Zusammensetzung gemäss vorhergehender Beschreibung auf ein Substrat **S1** und/oder ein Substrat **S2;**
b2) Aushärten der applizierten Zusammensetzung, insbesondere mittels Wasser;
c2) Erhitzen der ausgehärteten Zusammensetzung auf dem Substrat **S1** und/oder dem Substrat **S2** auf eine Temperatur von 100 °C bis 200 °C;
d2) Kontaktieren der Substrate **S1** und **S2** über die applizierte Zusammensetzung;
e2) Abkühlen und Aushärten der applizierten Zusammensetzung;
wobei die Substrate **S1** und **S2** gleich oder verschieden voneinander sind.

Weiterhin umfasst die vorliegende Erfindung ein Verfahren des Entklebens einer gemäss vorhergehender Beschreibung hergestellten Klebeverbindung zwischen den Substraten **S1** und **S2** umfassend die Schritte
a3) Erhitzen der ausgehärteten Zusammensetzung auf eine Temperatur von 100 °C bis 200 °C; und
b3) Lösen des Klebeverbindung zwischen den Substraten **S1** und **S2.**

Die gemäss dem beschriebenen Verfahren entklebten Substrate **S1** und **S2** können unter erneuter Verwendung des gleichen Klebstoffs, das heisst also ohne neuen Klebstoff aufzutragen, wieder verklebt werden, sei es um die gelöste Klebeverbindung wiederherzustellen, oder um eine neue Klebeverbindung mit einem unterschiedlichen Substrat **S3** herzustellen. Dies geschieht dadurch, dass der beim Lösen der Klebeverbindung auf den Substraten **S1** und **S2** zurückbleibende Klebstoff erneut auf eine Temperatur von 100 °C bis 200 °C erhitzt wird und an der gewünschten Stelle mit dem zu verklebenden Substrat kontaktiert wird. Das erneute Erhitzen kann bereits während der Abkühlung oder erst nach vollständiger Abkühlung und gegebenenfalls beliebiger Lagerung erfolgen. Anstelle des erneuten Erhitzens des Klebstoffs auf seine Applikationstemperatur kann das Substrat **S1** und/oder **S2,** auf welchem sich Klebstoff befindet und welches wiederverklebt werden soll, auch beispielsweise in einem Ofen oder dergleichen bei der entsprechenden Temperatur von 100 °C bis 200 °C gelagert werden.

Somit umfasst die vorliegende Erfindung also auch ein Verfahren des wiederholten Verklebens der Substrate **S1** und/oder **S2** gemäss vorhergehender Beschreibung, bei welchem die zu verklebenden Substrate **S1** und/oder **S2** gemäss einem ebenfalls vorhergehend beschriebenen Verfahren entklebt wurden.

Insbesondere ist dies ein Verfahren des Wiederverklebens der Substrate **S1** und/oder **S2,** welche gemäss einem vorhergehend beschriebenen Verfahren des Entklebens entklebt wurden, umfassend die Schritte
a4) Erhitzen der ausgehärteten Zusammensetzung auf dem Substrat **S1** und/oder dem Substrat **S2** auf eine Temperatur von 100 °C bis 200 °C;
b4) Kontaktieren der Substrate **S1** und/oder **S2** und/oder **S3** über die erhitzte Zusammensetzung;
c4) Abkühlen und Aushärten der Zusammensetzung.

Dabei ist das Substrat **S3** gleich oder unterschiedlich von den Substraten **S1** und/oder **S2,** wobei vor der Wiederverklebung von **S1** und/oder **S2** mit einem Substrat **S3** dieses gegebenenfalls analog zur ersten Verklebung der Substrate **S1** und/oder **S2** mit einer Klebstoffzusammensetzung versehen wurde.

Es zeigte sich völlig überraschend, dass das Verfahren der Entklebung und der Wiederverklebung mehrmals hintereinander wiederholt werden konnte.

Das Erhitzen der ausgehärteten Zusammensetzung für die Verklebung oder für die Entklebung oder für die Wiederverklebung der Substrate **S1** und **S2** kann mittels Infrarotstrahler, Zufuhr von Warmluft beispielsweise durch einen Föhn, Kontaktieren mit elektrischen Wärmeelementen, Lagerung im Ofen, Mikrowellenstrahlung, Induktionsheizung und dergleichen erfolgen. Dabei kann die ausgehärtete Zusammensetzung direkt erhitzt werden oder indirekt, wobei mindestens eines der verklebten, abgedichteten oder beschichteten Substrate erhitzt wird.

Für das direkte Erhitzen der Zusammensetzung mittels Induktionsheizung muss die Zusammensetzung elektrisch leitfähige Bestandteile enthalten, insbesondere ferromagnetische Bestandteile. Diese können insbesondere als Füllstoff in der Zusammensetzung vorhanden sein. Derartige Bestandteile sind insbesondere elektrisch leitfähiger Russ oder feine Metall- oder Metalloxidpartikel.

Für das indirekte Erhitzen der Zusammensetzung mittels Induktionsheizung muss mindestens eines der verklebten Substrate elektrisch leitfähig sein, bzw. elektrisch leitfähige Bestandteile, insbesondere ferromagnetische Bestandteile, beinhalten.

Für das Entkleben einer gemäss vorhergehender Beschreibung hergestellten Klebeverbindung braucht nicht unbedingt die ganze ausgehärtete Zusammensetzung erhitzt zu werden, sondern es reicht aus, die Zusammensetzung an der gewünschten Trennstelle zu erhitzen, beispielsweise mittels eines heissen Drahtes, der durch die Zusammensetzung gezogen wird.

Weiterhin umfasst die vorliegende Erfindung ein Verfahren des Abdichtens oder des Beschichtens eines Substrates **S1** und/oder **S2** umfassend die Schritte
a5) Applizieren einer Zusammensetzung gemäss vorhergehender Beschreibung auf ein Substrat **S1** und/oder ein Substrat **S2;** und
b5) Aushärten der applizierten Zusammensetzung, insbesondere mittels Wasser;
wobei die Substrate **S1** und **S2** gleich oder verschieden voneinander sind.

Entsprechend dem Verfahren des Entklebens bei Klebeverbindungen, umfasst die vorliegende Erfindung ebenfalls ein Verfahren des Ablösens einer gemäss vorhergehender Beschreibung hergestellten Abdichtung oder Beschichtung auf den Substraten **S1** und/oder **S2** umfassend die Schritte
a6) Erhitzen der ausgehärteten Zusammensetzung auf eine Temperatur von 100 °C bis 200 °C; und
b6) Lösen der Abdichtung oder Beschichtung vom Substrat **S1** und/oder **S2.**

Dabei braucht nicht unbedingt die ganze ausgehärtete Zusammensetzung erhitzt zu werden, sondern es reicht aus, die Zusammensetzung an der gewünschten Trennstelle zu erhitzen.

Betreffend der Schritte c1), b2), oder b5) der chemischen Aushärtung der Zusammensetzung mit Feuchtigkeit versteht der Fachmann, dass die Aushärtungsreaktion, in Abhängigkeit von Faktoren wie der verwendeten Zusammensetzung, der Substrate, der Temperatur, der Umgebungsfeuchtigkeit und der Klebegeometrie, bereits während der Applikation der Zusammensetzung beginnen kann. Der Hauptteil der chemischen Aushärtung findet im Allgemeinen jedoch nach der Applikation der Zusammensetzung statt.

Für die Aushärtung der Zusammensetzung gemäss den Schritten e2) und c4) beim Wiederverkleben der vorhergehend entklebten Substrate **S1** und **S2** ist keine Feuchtigkeit mehr notwendig.

Die Verwendung der vorhergehend beschrieben Zusammensetzung in einem der beschriebenen Verfahren ist nicht auf bestimmte Substrate beschränkt, sondern kann sowohl zum Verkleben, Abdichten oder zum Beschichten beliebiger Substrate eingesetzt werden.

Als Substrate **S1** und/oder **S2** und/oder **S3,** eignen sich insbesondere Beton, Zement, Mörtel, Backstein, Ziegel, Gips, Naturstein, Asphalt, Metall, Metalllegierung, Holz, Keramik, Glas, Kunststoff, Pulverbeschichtung, Farbe und Lack.

Die Substrate **S1** und/oder **S2** und/oder **S3** können bei Bedarf vor dem Applizieren der vorgängig beschriebenen Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösungsmitteln oder eine Beflammung oder eine Plasmabehandlung, insbesondere eine Luftplasma-Vorbehandlung bei atmosphärischem Umgebungsdruck. Weiterhin können die Substrate **S1** und/oder **S2** und/oder **S3** Vorbehandlungen beispielsweise in Form einer Grundierung aufweisen. Als Grundierungen in Frage kommen beispielsweise Haftvermittlerzusammensetzungen oder Primer.

Der Auftrag der beschriebenen Zusammensetzung zum Verkleben und/oder Abdichten von Substraten **S1** und/oder **S2** erfolgt typischerweise aus handelsüblichen Kartuschen, welche für kleinere Anwendungen bevorzugt manuell betrieben werden. Eine Applikation mittels Druckluft aus einer Kartusche oder aus einem Fass oder Hobbock mittels einer Förderpumpe oder eines Extruders, gegebenenfalls mittels eines Applikations-Roboters, ist ebenfalls möglich. Derartige Applikationsarten werden insbesondere in Anwendungen der industriellen Fertigung oder bei grossen Applikationen bevorzugt.

Die Verwendung einer vorhergehend beschriebenen Zusammensetzung weist insbesondere durch die Möglichkeit der Herstellung von reversiblen Klebeverbindungen bedeutende Vorteile gegenüber herkömmlichen Polyurethanklebstoffen auf. So eignen sich erfindungsgemässe Klebstoffe und Verfahren zur Verklebung insbesondere für Anwendungen, wo es nützlich oder sogar vorgeschrieben sein kann, dass die hergestellten Klebeverbindungen nach einem bestimmten Zeitraum wieder gelöst werden können. Beispielsweise ist dies im Automobilbau der Fall, wo die Demontage von verklebten Bestandteilen eines Automobils für Reparaturzwecke oder auch für Verwertung und Recycling von Alt- und Unfallautos eine bedeutende Rolle spielt.

Eine weitere Möglichkeit für den vorteilhaften Einsatz einer erfindungsgemässen Zusammensetzung als Klebstoff liegt darin, dass beliebige zu verklebende Substrate, welche beispielsweise Modul- oder Anbauteile von Automobilen sind, unabhängig vom Zeitpunkt und vom Ort, an dem die Verklebung vorgenommen wird, mit dem erfindungsgemässen Klebstoff versehen werden können. Dieser wird beispielsweise als Rund- oder Dreiecksraupe oder als Kantenumhüllung auf dem zu verklebenden Substrat appliziert und härtet dort, insbesondere mittels Luftfeuchtigkeit, ein erstes Mal aus. Nach allfälliger Lagerung und allfälligem Transport kann die Zusammensetzung auf dem Substrat gemäss dem vorhergehenden Verfahren auf eine Temperatur von 100 °C bis 200 °C erhitzt werden und die zu verklebenden Substrate können wie vorgesehen verklebt werden. Der Vorteil dieser Anwendung ist, dass der Schritt der Applikation des Klebstoffs und der Schritt des Verklebens zweier Substrate **S1** und **S2** räumlich und zeitlich voneinander getrennt werden können. Beispielsweise kann in der Automobilherstellung eine Windschutzscheibe direkt vom Zulieferer mit bereits appliziertem und ausgehärtetem Klebstoff geliefert werden, wodurch sich der Aufwand für den Automobilhersteller an der Fertigungslinie direkt verringert. Weiterhin verringern sich in diesem Fall für den Automobilhersteller der Platzbedarf und die Kosten, da er zumindest teilweise auf die Anschaffung von Applikationsgeräten für Klebstoffe oder für Vorbehandlungen verzichten kann.

Im Weiteren verbessert sich im Fertigungsbetrieb auch die Sicherheit, da der Umgang mit teilweise gesundheitsbeeinträchtigenden Klebstoffen eingeschränkt werden kann.

Für die Qualität der Haftverbindung des zu verklebenden Substrats erweist sich die vom Schritt der Verklebung separate Applikation des Klebstoffs, beispielsweise durch den Zulieferer, insbesondere auch in den Fällen als vorteilhaft, wo sich der Zustand der Substratoberfläche mit der Zeit verändert, da der Klebstoff auf die Substratoberfläche in ihrem ursprünglichen Zustand appliziert werden kann. Beispielsweise ist das bei der Verklebung von Metalloberflächen der Fall. Ebenfalls wird durch die frühe Applikation des Klebstoffs auf das Substrat verhindert, dass die Klebefläche des Substrats während der Lagerung und/oder dem Transport verschmutzt wird und gereinigt und/oder vorbehandelt werden muss, um den Haftverbund nicht zu beeinträchtigen.

Zuletzt erweist sich die applizierte und ausgehärtete Klebstoffraupe, welche nicht klebrig und formstabil ist, auf einem Substrat, insbesondere auch auf einer Windschutzscheibe, als geeigneter Schutz und Abstandhalter zum Stapeln für Lagerung oder Transport.

Die beschriebenen Vorteile der Verwendung einer erfindungsgemässen Zusammensetzung als Klebstoff treten selbstverständlich auch bei deren Verwendung als Dichtstoff und teilweise auch bei der Verwendung als Beschichtung auf.

Weiterhin umfasst die vorliegende Erfindung einen mit einer beschriebenen Zusammensetzung verklebten, entklebten, abgedichteten und/oder beschichteten Artikel, welcher durch eines der beschriebenen Verfahren erhalten wird.

Bei diesen Artikeln handelt es sich vorzugsweise um ein Gebäude oder ein Bauwerk des Hoch- oder Tiefbaus, ein industriell gefertigtes Gut oder ein Konsumgut, insbesondere ein Fenster, eine Haushaltsmaschine, oder ein Transportmittel, insbesondere ein Fahrzeug, oder ein Anbauteil eines Fahrzeugs.

Weiterhin bevorzugt handelt es ich um einen Artikel, auf welchem eine Zusammensetzung gemäss vorhergehender Beschreibung als Rund- oder Dreiecksraupe appliziert wurde, wobei die applizierte Zusammensetzung, insbesondere mittels Wasser, zumindest teilweise ausgehärtet ist. Ein derartiger Artikel kann durch Erhitzen der applizierten Klebstoffraupe und durch Kontaktieren mit einem zu verklebenden Substrat verklebt werden. Insbesondere ist ein solcher Artikel eine Fensterscheibe eines Automobils.

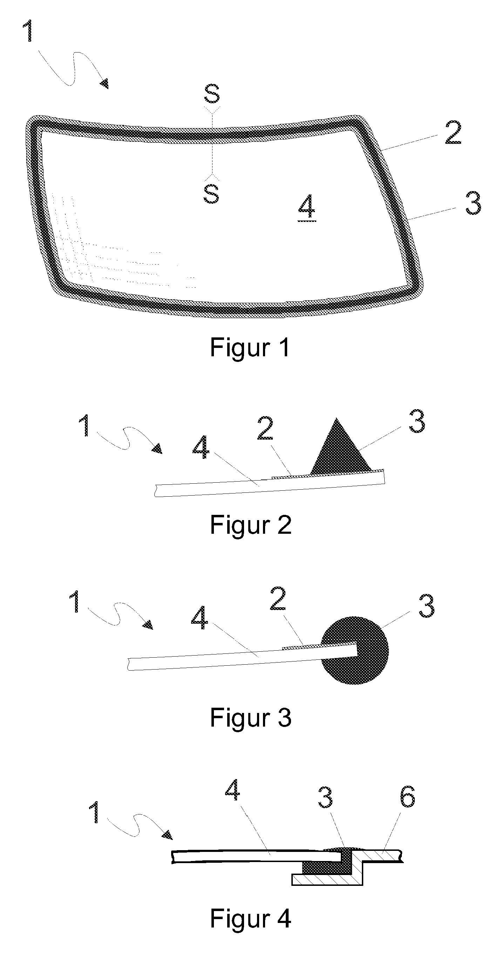

In den Figuren 1 bis 6 sind jeweils Ausführungsbeispiele der vorliegenden Erfindung gemäss vorhergehender Beschreibung schematisch dargestellt. Gleiche oder gleich wirkende Elemente sind in den verschiedenen Figuren mit den gleichen Bezugszeichen versehen. In den Figuren sind nur die für das unmittelbare Verständnis der Erfindung wesentlichen Elemente gezeigt.

Selbstverständlich ist die Erfindung nicht auf gezeigte und beschriebene Ausführungsbeispiele beschränkt.

Figur 1 zeigt schematisch eine Windschutzscheibe 1 eines Automobils, welche aufgebaut ist aus einer Glasscheibe 4, welche an ihrem äusseren Rand mit einer Glaskeramik 2 beschichtet ist und auf welcher eine Zusammensetzung, wie sie vorhergehend beschrieben wurde, als Klebstoff 3 in Form einer Dreiecksraupe appliziert worden ist.

Figur 2 zeigt schematisch einen Querschnitt durch einen Teil der Windschutzscheibe 1 aus Figur 1 entlang der Linie S-S.

Nach der Applikation des Klebstoffs kann die Windschutzscheibe direkt an der gewünschten Stelle gefügt werden, oder der als Dreiecksraupe aufgetragene Klebstoff härtet in dieser Form durch die Reaktion mit Feuchtigkeit vollständig aus, und die Windschutzscheibe kann in diesem Zustand gelagert oder transportiert werden. Für die Montage der Windschutzscheibe 1 an ein Automobil wird der Klebstoff auf eine Temperatur von 100 °C bis 200 °C erhitzt. Dabei spaltet sich das Polyurethanpolymer **P** an den sterisch gehinderten Harnstoffgruppen insbesondere zu sterisch gehinderten Diaminen und zu, gegebenenfalls sterisch gehinderten, Isocyanaten. In diesem Zustand wird dann die Windschutzscheibe 1 an der gewünschten Stelle gefügt. Beim Abkühlen des Klebstoffs reagieren die sterisch gehinderten Aminogruppen des Diamins wiederum wie vorhergehend beschrieben mit den gegebenenfalls sterisch gehinderten Isocyanatgruppen des Polyisocyanats, so dass der Klebstoff aushärtet und einen stabilen Haftverbund bildet.

Figur 3 zeigt schematisch einen Querschnitt durch eine Windschutzscheibe 1, an deren Rand der Klebstoff 3 als Kantenumhüllung aufgetragen ist. Ein in dieser Form aufgetragener Klebstoff eignet sich insbesondere für Anwendungen, wo die Scheibe von mehreren Seiten, also auch an der Stirnseite, mit einem Substrat verklebt wird und/oder wo der überschüssige Klebstoff als Dichtungsmasse für die Fuge zwischen Windschutzscheibe und Karosserie verwendet wird. Diese Art der Verklebung wird insbesondere beim bündigen Verkleben einer Automobilverglasung, dem so genannten "Flush Glazing", eingesetzt (vgl. Figur 4). Ein in dieser Form, wie in Figur 3 dargestellt, ausgehärteter Klebstoff bietet zusätzlich einen guten Kantenschutz für die noch nicht verklebte Windschutzscheibe.

Figur 4 zeigt schematisch eine verklebte Windschutzscheibe 1, wobei der Klebstoff 3, welcher wie in Figur 3 dargestellt auf den Rand der Windschutzscheibe aufgetragen wurde, neben dem Kleben auch die Funktion der Abdichtung der Fuge zwischen der Windschutzscheibe 1 und der Karosserie 6 erfüllt. Diese Art der Verklebung ist dem Fachmann unter dem Begriff "Flush Glazing" bestens bekannt.

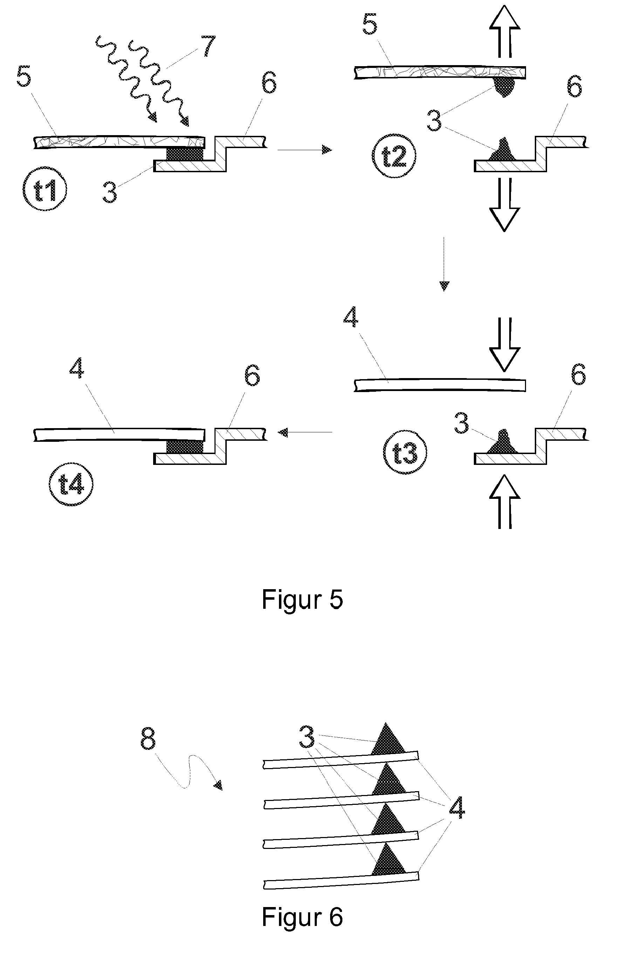

Figur 5 zeigt schematisch ein Reparaturverfahren, bei welchem eine beschädigte Glasscheibe 5 durch eine neue Glasscheibe 4 ausgetauscht wird. Dabei wird in einem ersten Schritt t1 der Klebstoff mittels Wärmestrahlung 7 auf eine Temperatur von 100 °C bis 200 °C aufgeheizt. Hat der Klebstoff die für die Entklebung erforderliche Temperatur erreicht, wird die Glasscheibe 5 in einem Schritt t2 von der Karosserie 6 entfernt. Unmittelbar nach der Entfernung der beschädigten Glasscheibe 5, also noch bevor der auf der Karosserie zurückbleibende Klebstoff wieder abgekühlt ist, wird eine neue Glasscheibe 4 in einem Schritt t3 über dem Klebstoff gefügt. Es ist auch möglich, dass auf der neuen Glasscheibe 4 vor dem Verkleben zusätzlicher Klebstoff appliziert wird, um die Menge des, zusammen mit der beschädigten Glasscheibe 5, entfernten Klebstoffs zu kompensieren. In einem Schritt t4 wird der Klebstoff wieder abgekühlt und härtet dadurch chemisch aus.

Figur 6 zeigt schematisch einen Stapel Windschutzscheiben 8, auf welchen je eine Dreiecksraupe eines Klebstoffs 3 appliziert wurde. Dieser Klebstoff 3 ist ausgehärtet und dient beim Stapeln als Abstandhalter, damit die einzelnen Glasscheiben nicht miteinander in Berührung kommen und dadurch verkratzen.

### Beispiele

### Beschreibung der Messmethoden

**Infrarotspektren** wurden auf einem FT-IR Gerät 1600 von Perkin-Elmer gemessen, als unverdünnte Filme auf einer horizontalen ATR-Messeinheit mit ZnSe-Kristall; die Absorptionsbanden sind in Wellenzahlen (cm⁻¹) angegeben (Messfenster: 4000-650 cm⁻¹); der Zusatz sh weist auf eine als Schulter erscheinende Bande hin, der Zusatz br auf eine breite Bande.

**¹H-NMR-Spektren** wurden auf einem Spektrometer des Typs Bruker DPX-300 bei 300.13 MHz gemessen; die chemischen Verschiebungen δ sind angegeben in ppm relativ zu Tetramethylsilan (TMS), Kopplungskonstanten *J* sind angegeben in Hz. Echte und Pseudo-Kopplungsmuster wurden nicht unterschieden.

Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Scherrate zwischen 1 und 1000 s⁻¹) gemessen.

Der **Amingehalt,** das heisst der totale Gehalt an freien Aminogruppen und blockierten Aminogruppen (Aldiminogruppen, Enaminogruppen) in den hergestellten Verbindungen, wurde titrimetrisch bestimmt (mit 0.1N HClO₄ in Eisessig, gegen Kristallviolett) und ist stets angegeben in mmol N/g.

### Herstellung von blockierten Aminen BA

### Dialdimin BA-1

In einem Rundkolben wurden unter Stickstoffatmosphäre 32.36 g (0.114 mol) 2,2-Dimethyl-3-lauroyloxy-propanal vorgelegt. Unter kräftigem Rühren wurden aus einem Eintropftrichter 10.00 g (0.110 mol N) 1,8-Menthandiamin (Aldrich, techn.; Amingehalt 11.05 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 40.1 g eines klaren, blassgelben Öls mit einem Amingehalt von 2.75 mmol N/g und einer Viskosität von 93 mPa·s bei 20 °C.
IR: 2956, 2922, 2852, 1736 (C=O), 1666 (C=N), 1466, 1418, 1392, 1374sh, 1364, 1310, 1302, 1248, 1181sh, 1158, 1112, 1072, 1020, 996, 932, 896, 768, 722.
¹H-NMR (CDCl₃, 300 K): δ 7.51, 7.49, 7.42 und 7.38 (4xs, Verhältnis ca. 5/1/1/5; 2 H, CH=N), 4.03 und 4.02 (2xs, 2x2 H, C(CH₃)₂-C*H*₂-O), 2.28 und 2.27 (2xt, *J* ≈ 7.5, 2x2 H, OC(O)-C*H*₂-CH₂), 1.75 (d, *J* ≈ 13.4, 1 H, C^{Cy}*H-*C(CH₃)₂N), 1.60 (*m,* 6 H, 2 Cy-H und OC(O)-CH₂-C*H*₂), 1.42-1.15 (m, 38 H, CH₃-(C*H*₂)₈-CH₂-CH₂-CO und 6 Cy-H), 1.07 und 1.06 (2xs, 2x6 H, C(C*H*₃)₂-CH₂-O), 1.00 (s, 6 H, C^{Cy}H-C(C*H*₃)₂N), 0.97 (s, 3 H, Cy-C(C*H*₃)N), 0.88 (t, *J* ≈ 6.7, 6 H, C*H*₃-(CH₂)₁₀-CO).

### Dienamin BA-2

In einem Rundkolben mit Wasserabscheider wurden unter Stickstoffatmosphäre 50.0 g N-Isopropyl-3-((isopropylamino)methyl)-3,5,5-trimethylcyclohexylamin (Jefflink^{®} 754, Huntsman; Amingehalt 7.54 mmol N/g), 90.0 g Isobutyraldehyd und 200 ml Cyclohexan eingewogen und die Mischung unter Rühren während 96 Stunden unter Rückfluss erhitzt. Dabei sammelten sich 6.9 ml Wasser im Abscheider. Darauf wurde die flüchtigen Bestandteile der Reaktionsmischung im Vakuum entfernt (10 mbar, 70 °C, 2 Stunden; 5·10⁻² mbar, 90 °C, 2 Stunden). Ausbeute: 72.3 g einer gelblichen, klaren Flüssigkeit mit einem Amingehalt von 5.25 mmol N/g.
IR: 2960, 2922, 2916, 2904, 2870, 2849sh, 2813sh, 2730, 2611, 1736, 1717, 1670 (C=N), 1622, 1460, 1378, 1360, 1344sh, 1322, 1312sh, 1290, 1216, 1190, 1166, 1144, 1137sh, 1116, 1096, 1070, 1056sh, 1044sh, 1024, 1000, 982, 954, 934, 922, 915, 888, 858, 814, 787sh, 778, 766sh, 710.

### Herstellung von Polyurethan-Zusammensetzungen

### Beispiel 1 und Vergleichsbeispiel 2

In einem Polypropylenbecher mit Schraubverschluss wurden das Polymer ***P-1***, bzw. das Polymer ***P-2,*** deren Herstellung nachfolgend beschrieben wird, mittels eines Zentrifugalmischers (SpeedMixer™ DAC 150, FlackTek Inc.; 1 min. bei 2500 U/min) mit einem Zinn-Katalysator zu einer homogenen Masse vermischt. Die eingesetzten Mengen sind in Tabelle 1 aufgeführt.

Das Polymer ***P-1*** wurde wie folgt hergestellt:
In einer Glasapparatur wurden unter Rühren und StickstoffAtmosphäre 75.0 g entwässertes Polyoxypropylen-Diol (Caradol^{®} 56-11, Shell; OH-Zahl 56 mg KOH/g) mit 13.5 g Toluylendiisocyanat (TDI; Desmodur^{®} T 80 P, Bayer) bei 80 °C während 24 Stunden zu einem Prepolymer mit einem Gehalt an freien Isocyanat-Gruppen von 3.62 Gew.-% umgesetzt. Das Prepolymer wurde auf Raumtemperatur abgekühlt, dann wurden 4.4 g N-Isopropyl-3-((isopropylamino)methyl)-3,5,5-trimethylcyclohexylamin (Jefflink^{®} 754, Huntsman) zugegeben und rasch eingerührt. Es entstand ein hellgelber, klarer Honig mit einem Gehalt an freien Isocyanat-Gruppen von 1.86 Gew.-% und einer Viskosität von 140 Pa.s bei 20 °C.

Das Polymer ***P-2*** wurde wie folgt hergestellt:
In einer Glasapparatur wurden unter Rühren und StickstoffAtmosphäre 80.0 g entwässertes Polyoxypropylen-Diol (Caradol^{®} 56-11, Shell; OH-Zahl 56 mg KOH/g) mit 10.5 g Toluylendiisocyanat (TDI; Desmodur^{®} T 80 P, Bayer) bei 80 °C während 24 Stunden umgesetzt. Das so erhaltene Prepolymer wies einen Gehalt an freien Isocyanat-Gruppen von 1.78 Gew.-% und eine Viskosität von 40 Pa.s bei 20 °C auf.

**Tabelle 1: Zusammensetzung des Beispiels 1 und des Vergleichsbeispiels 2.**

| Beispiel | **1** | **2** **(Vergleich)** |
|---|---|---|
| Polymer ***P-1*** | 40.0 g | - |
| Polymer ***P-2*** | - | 40.0 g |
| Zinn-Katalysator^{a} | 0.2 g | 0.2 g |

| | | |
|---|---|---|
| ^{a} 10 Gew.-% Dibutylzinn-dilaurat in Diisodecylphthalat. | | |

Ein kleiner Teil der so erhaltenen Massen wurde jeweils zur Bestimmung der Hautbildungszeit (Zeit bis zur Klebefreiheit, "tack-free time") verwendet, indem die Masse in einer Schichtdicke von ca. 2 mm auf Pappkarton aufgetragen, dieser im Normklima (23±1 °C, 50±5% relative Luftfeuchtigkeit) aufbewahrt und die Zeit gemessen wurde, die es dauerte, bis beim leichten Antippen der Oberfläche der Masse mittels einer Pipette aus LDPE erstmals keine Rückstände auf der Pipette zurückblieben.

Mit dem Hauptteil der Masse wurden Filme von ca. 3 mm Dicke hergestellt, indem die Masse in eine plane PTFE-Form gegossen und während 7 Tagen im Normklima ausgehärtet wurde. Es wurden klare, klebefreie und elastische Polyurethanfilme erhalten, welche in Stücke von 10x10 mm geschnitten wurden. Jeweils eines dieser Stücke wurde auf eine Kartonunterlage platziert, während einer bestimmten Zeit in einem Büchi-Glasofen erwärmt, dann an der Luft wieder abgekühlt, wobei das Verhalten des Polyurethanfilms verfolgt wurde (z.B. durch Berühren/Bewegen mit einem Stab). Mit einigen Stücken wurden die Erwärmungs- und Abkühlungsphasen ein- oder mehrfach wiederholt.

Die Ergebnisse dieser Untersuchungen sind in Tabelle 2 dargestellt.

**Tabelle 2: Verhalten beim Erwärmen/Abkühlen der Polyurethan-Zusammensetzungen des Beispiels 1 und des Vergleichsbeispiels 2.**

| Beispiel | **1** | **2** **(Vergleich)** |
|---|---|---|
| Hautbildungszeit | 5h 30min | 7h 30min |

| *Verhalten nach Erwärmen:* | | |
|---|---|---|
| 5 min. 100 °C | keine Veränderung | keine Veränderung |
| 5 min. 120 °C | wird weich, aber keine Formveränderung | keine Veränderung |
| 2 min. 140 °C | fliesst | keine Veränderung |
| 1 min. 160 °C | fliesst | wird weich, aber keine Formveränderung |

| *Verhalten nach Erwärmen und wieder Abkühlen:* | | |
|---|---|---|
| 2 min.140 °C / 2 min.RT | klebefrei, elastisch (wie zu Beginn) | klebefrei, elastisch (wie zu Beginn) |
| 1 min.160 °C / 2 min.RT | klebefrei, elastisch (wie zu Beginn) | klebefrei, elastisch (wie zu Beginn) |

| *Verhalten nach Erwärmen*/ *Abkühlen*/ *wieder Erwärmen:* | | |
|---|---|---|
| 2 min.140 °C/2 min.RT/ 2 min.140 °C | fliesst | keine Veränderung |
| 1 min.160 °C/2 min.RT/ 1 min. 160 °C | fliesst | keine Veränderung |

| *Verhalten nach 2 Cyclen (Erwärmen* /*Abkühlen* / *Erwärmen* /*Abkühlen):* | | |
|---|---|---|
| 140 °C/ RT/140 °C/RT, je 2 min. | klebefrei, elastisch (wie zu Beginn) | klebefrei, elastisch (wie zu Beginn) |

| *Verhalten nach mehreren Cyclen (nach letzter Erwärmung bzw. Abkühlung):* | | |
|---|---|---|
| 3 mal 140 °C/ RT, je 2 min. | heiss fliessend; kalt klebefrei, elastisch | heiss bzw. kalt keine Veränderungen |
| 5 mal 140 °C/ RT, je 2 min. | heiss zähflüssig; kalt klebefrei, elastisch | (nicht bestimmt) |
| 8 mal 140 °C/ RT, je 2 min. | heiss fest; kalt klebefrei, elastisch | (nicht bestimmt) |

### Beispiele 3 bis 5 und Vergleichsbeispiele 6 bis 7

In einem Polypropylenbecher mit Schraubverschluss wurden das Polymer ***P-3,*** bzw. das Polymer ***P-4***, deren Herstellung nachfolgend beschrieben wird, mittels eines Zentrifugalmischers (SpeedMixer™ DAC 150, FlackTek Inc.; 1 min. bei 2500 U/min) mit dem Dialdimin ***BA-1,*** bzw. mit dem Dienamin ***BA-2,*** sowie mit Katalysatoren zu einer homogenen Masse vermischt, die so erhaltene Masse sofort in eine innenlackierte Aluminiumtube abgefüllt und diese luftdicht verschlossen. Die eingesetzten Mengen und die Katalysator-Typen sind in Tabelle 3 aufgeführt.

Das Polymer ***P-3*** wurde wie folgt hergestellt:
In einer Glasapparatur wurden unter Rühren und StickstoffAtmosphäre 1400 g entwässertes Polyoxypropylen-Diol (Acclaim^{®} 4200 N, Bayer; OH-Zahl 28.5 mg KOH/g) mit 135 g Toluylendiisocyanat (TDI; Desmodur^{®} T 80 P, Bayer) bei 80 °C während 24 Stunden umgesetzt. Das so erhaltene Prepolymer wies einen Gehalt an freien Isocyanat-Gruppen von 2.25 Gew.-% und eine Viskosität von 11 Pa·s bei 20 °C auf.

Das Polymer ***P-4*** wurde wie folgt hergestellt:
In einer Glasapparatur wurden unter Rühren und StickstoffAtmosphäre 590 g entwässertes Polyoxypropylen-Diol (Acclaim^{®} 4200 N, Bayer; OH-Zahl 28.5 mg KOH/g) und 1180 g entwässertes Polyoxyethylenpolyoxypropylen-Triol (Caradol^{®} MD34-02, Shell; OH-Zahl 35.0 mg KOH/g) mit 230 g Isophorondiisocyanat (IPDI; Vestanat^{®} IPDI, Degussa) bei 80 °C in Anwesenheit von 0.1 g Dibutylzinn-dilaurat während 24 Stunden umgesetzt. Das so erhaltene Prepolymer wies einen Gehalt an freien Isocyanat-Gruppen von 2.15 Gew.-% und eine Viskosität von 19 Pa.s bei 20 °C auf.

Das Verhältnis zwischen den Isocyanatgruppen der Polymere ***P-3*** bzw. ***P-4*** und den geschützten Aminogruppen des Dialdimins ***BA-1*** bzw. des Dienamins ***BA-2*** beträgt für alle Beispiele 1.0 / 0.7.

**Tabelle 3: Zusammensetzung der Beispiele 3 bis 5 und der Vergleichsbeispiele 6 bis 7.**

| Beispiel | **3** | **4** | **5** | **6** **(Vgl.)** | **7** **(Vgl.)** |
|---|---|---|---|---|---|
| Polymer ***P-3*** | 60.0 g | - | - | 60.0 g | - |
| Polymer ***P-4*** | - | 60.0 g | 60.0 g | - | 60.0 g |
| Dialdimin ***BA-1*** | 8.2 g | 7.8 g | - | - | - |
| Dienamin ***BA-2*** | - | - | 4.1 g | - | - |
| Säure-Katalysator^{a} | 0.6 g | 0.6 g | 0.6 g | 0.6 g | 0.6 g |
| Zinn-Katalysator^{b} | - | 0.15 g | 0.15 g | - | 0.15 g |
| Amin-Katalysator^{c} | 0.06 g | 0.15 g | 0.15 g | 0.06 g | 0.15 g |

| | | | | | |
|---|---|---|---|---|---|
| ^{a} 5 Gew.-% Salicylsäure in Dioctyladipat. ^{b} 10 Gew.-% Dibutylzinn-dilaurat in Diisodecylphthalat. ^{c}2,2'-Dimorpholinodiethylether (DABCO^{®} DMDEE Catalyst, Air Products). | | | | | |

Mit einem kleinen Teil der so erhaltenen Massen wurde jeweils wie für Beispiel 1 beschrieben die Hautbildungszeit bestimmt. Der Hauptteil der Massen wurde jeweils wie in Beispiel 1 beschrieben zu einem Polyurethanfilm ausgehärtet. Aus den Filmen wurden Hanteln mit einer Länge von 75 mm, bei einer Steglänge von 30 mm und einer Stegbreite von 4 mm, ausgestanzt und diese gemäss DIN EN 53504 auf Zugfestigkeit und Bruchdehnung geprüft (Zuggeschwindigkeit: 200 mm/min). Mit dem in der Tube verbliebenen Rest der Massen wurde die Lagerstabilität der unausgehärteten Polyurethan-Zusammensetzungen über die Veränderung deren Viskosität während der Lagerung in der Wärme bestimmt. Dazu wurden die Massen jeweils in der verschlossenen Tube im Ofen bei 60°C gelagert und ihre Viskosität bei 20 °C ein erstes Mal nach 4 Stunden und ein zweites Mal nach 7 Tagen Lagerdauer gemessen. Die Lagerstabilität ergibt sich aus der prozentualen Zunahme des zweiten Viskositätswerts gegenüber dem ersten. Die Ergebnisse dieser Prüfungen sind in Tabelle 4 dargestellt.

**Tabelle 4: Lagerstabilität, Hautbildungszeit und mechanische Eigenschaften der Polyurethan-Zusammensetzungen der Beispiele 3 bis 5 und der Vergleichsbeispiele 6 bis 7.**

| Beispiel | **3** | **4** | **5** | **6** **(Vgl.)** | **7** **(Vgl.)** |
|---|---|---|---|---|---|
| Viskosität nach 4h^{a} | 8.2 Pa·s | 11.9 Pa·s | 15.5 Pa·s | 10.9 Pa·s | 18.5 Pa·s |
| Viskosität nach 7d^{a} | 9.3 Pa.s | 12.6 Pa.s | 16.7 Pa.s | 11.5 Pa.s | 19.0 Pa.s |
| Viskositätszunahme^{b} | 13% | 6% | 8% | 5% | 3% |
| Hautbildungszeit | 3h 20min | 4h 20min | 3h 30min | 4h 45min | >8h |
| Zugfestigkeit | 0.5 MPa | 2.5 MPa | 1.3 MPa | 4.0 MPa | 1.1 MPa |
| Bruchdehnung | 970% | 330% | 320% | 2200% | 200% |

| | | | | | |
|---|---|---|---|---|---|
| ^{a} Lagerung bei 60°C. ^{b} =(Viskosität nach 7 d / Viskosität nach 4 h - 1)×100%. | | | | | |

Für die Beispiele 3 bis 5 wurden Stücke von 10x10 mm aus dem Polyurethanfilm ausgeschnitten und diese wie in Beispiel 1 beschrieben jeweils auf ihr Verhalten bei Erwärmung und Abkühlung untersucht. Die Ergebnisse dieser Untersuchungen sind in Tabelle 5 dargestellt.

**Tabelle 5: Verhalten beim Erwärmen/Abkühlen der Polyurethan-Zusammensetzungen der Beispiele 3 bis 5.**

| **Beispiel 3** | **Beispiel 4** | **Beispiel 5** |
|---|---|---|
| *Verhalten beim ersten Erwärmen:* | | |
| verformt sich ab 120 °C, wird flüssig ab 135 °C | verformt sich ab 160 °C, wird flüssig ab 170 °C | verformt sich ab 170 °C, wird flüssig ab 180 °C |

| *Verhalten beim Abkühlen auf RT nach erstem Erwärmen (Verflüssigung):* | | |
|---|---|---|
| wird innerhalb von 2 Minuten wieder klebefrei und fest, elastisch | wird innerhalb von 30 Minuten wieder klebefrei und fest, elastisch | wird innerhalb von 5 Minuten wieder klebefrei und fest, elastisch |

| *Verhalten beim zweiten Erwärmen:* | | |
|---|---|---|
| wird flüssig ab 135 °C | wird flüssig ab 170 °C | wird flüssig ab 180 °C |

| *Verhalten beim zweiten Abkühlen:* | | |
|---|---|---|
| wird innerhalb von 2 Minuten wieder klebefrei und fest, elastisch | bleibt klebrig | wird innerhalb von 15 Minuten wieder klebefrei und fest, elastisch |

| *Verhalten nach mehreren Erwärmungs-*/*Abkühlungs-Cyclen:* | | |
|---|---|---|
| verflüssigt und verfestigt sich noch mehrere Male in der gleichen Weise | (nicht geprüft) | (nicht geprüft) |

### Herstellung von elastischen Polyurethan-Klebstoffen

### Beispiele 8 bis 9

Die jeweiligen Bestandteile der Beispiele gemäss Tabelle 6 wurden in den angegebenen Mengen in einem Vakuummischer unter Feuchtigkeitsausschluss zu einer homogenen Paste verarbeitet, diese unverzüglich in eine innenlackierte Aluminium-Kartusche abgefüllt und die Kartusche luftdicht verschlossen.

Das Polyurethanpolymer ***P-5*** wurde wie folgt hergestellt:
In einer Glasapparatur wurden unter Rühren und StickstoffAtmosphäre 1780 g entwässertes Polyoxypropylen-Diol (Acclaim^{®} 4200 N, Bayer; OH-Zahl 28.5 mg KOH/g) und 500 g Polyoxypropylen-Triol (Acclaim^{®} 6300, Bayer; OH-Zahl 28.0 mg KOH/g) mit 220 g Toluylendiisocyanat (TDI; Desmodur^{®} T 80 P, Bayer) bei 80 °C während 24 Stunden umgesetzt. Das so erhaltene Prepolymer wies einen Gehalt an freien Isocyanat-Gruppen von 2.13 Gew.-% und eine Viskosität von 12 Pa.s bei 20 °C auf.

Das Verhältnis zwischen den Isocyanatgruppen (der Polymere ***P-4*** bzw. ***P-5*** sowie des als Trocknungsmittel eingesetzten TDI) und den geschützten Aminogruppen (des Dialdimins ***BA-1*)** beträgt für beide Beispiele 1.0 / 0.7.

**Tabelle 6: Zusammensetzung der Klebstoffe der Beispiele 8 bis 9.**

| Beispiel | **8** | **9** |
|---|---|---|
| Polymer ***P-4*** | - | 48.0 g |
| Polymer ***P-5*** | 178.0 g | 130.0 g |
| Dialdimin ***BA-1*** | 25.3 g | 25.3 g |
| Trocknungsmittel^{a} | 0.8 g | 0.8 g |
| Weichmacher^{b} | 48.3 g | 47.9 g |
| calciniertes Kaolin^{c} | 70.0 g | 70.0 g |
| Russ^{c} | 70.0 g | 70.0 g |
| Epoxysilan^{d} | 1.2 g | 1.2 g |
| Säure-Katalysator^{e} | 6.0 g | 6.0 g |
| Zinn-Katalysator^{f} | - | 0.4 g |
| Amin-Katalysator^{g} | 0.4 g | 0.4 g |

| | | |
|---|---|---|
| ^{a} Toluylendiisocyanat (Desmodur^{®} T 80 P, Bayer). ^{b}Diisodecylphthalat (DIDP; Palatinol^{®} Z, BASF). ^{c} 24h getrocknet bei 130 °C. ^{d} 3-Glycidoxypropyltriethoxysilan (Dynasylan^{®} GLYEO, Degussa). ^{e} 5 Gew.-% Salicylsäure in Dioctyladipat. ^{f} 10 Gew.-% Dibutylzinn-dilaurat in Diisodecylphthalat. ^{g} 2,2'-Dimorpholinodiethylether (DABCO^{®} DMDEE Catalyst, Air Products). | | |

Die so erhaltenen einkomponentigen elastischen Polyurethan-Klebstoffe wurden auf Applikationseigenschaften, Offenzeit, Aushärtungsgeschwindigkeit und mechanische Eigenschaften nach der Aushärtung geprüft.

Als Mass für die Applikationseigenschaften wurden die Standfestigkeit und der Fadenzug herangezogen. Zur Bestimmung der Standfestigkeit wurde der Klebstoff mittels Kartuschenpistole über eine Dreiecksdüse als waagrecht verlaufende Dreiecksraupe mit einem Basisdurchmesser von 8 mm und einer Höhe (Abstand der Dreiecksspitze von der Basis) von 20 mm auf ein senkrecht stehendes Stück Pappkarton aufgetragen. Nach 5 Minuten wurde gemessen, wie weit sich die Spitze abgesenkt, d.h. von der ursprünglichen Position in der Mitte der Dreiecksraupe wegbewegt, hatte. Als "sehr gut" wurde bewertet, wenn sich die Spitze in vollständig oder annährend unveränderter Position befand, als "gut", wenn die Spitze sich zwischen Mitte und Basisende befand. Der Fadenzug wurde qualitativ bestimmt, indem etwas Klebstoff mittels Kartuschenpistole auf ein an der Wand befestigtes Stück Pappkarton aufgetragen wurde, die Kartuschenpistole beim Auftragsende durch rasches Zurückziehen vom aufgetragenen Klebstoff weggezogen und die Länge des dabei an der Abrissstelle zurückbleibenden Fadens gemessen wurde.

Als Mass für die Offenzeit wurde die Hautbildungszeit (Zeit bis zur Klebefreiheit, "tack-free time") herangezogen. Die Hautbildungszeit wurde wie bei Beispiel 1 beschrieben bestimmt.

Als Mass für die Aushärtungsgeschwindigkeit wurde die Zeit bis zur Durchhärtung des Klebstoffs herangezogen. Die Zeit bis zur Durchhärtung wurde untersucht, indem der Klebstoff mittels Kartuschenpistole durch eine Rundspitze (Öffnung 10 mm) als waagrechter, frei hängender Konus mit einer Länge von ca. 50 mm und einer Dicke in der Mitte von 30 mm auf ein an der Wand befestigtes Stück Pappkarton aufgetragen wurde, während 7 Tagen im Normklima belassen, dann vertikal mittig aufgeschnitten und die Dicke der ausgehärteten Klebstoff-Schicht mit einem Massstab gemessen wurde.

Zur Bestimmung der mechanischen Eigenschaften nach der Aushärtung wurden die Shore A-Härte, die Zugfestigkeit, Bruchdehnung und das E-Modul gemessen. Die Shore A-Härte wurde bestimmt nach DIN 53505 an während 14 Tagen im Normklima ausgehärteten Prüfkörpern. Zur Prüfung der weiteren mechanischen Eigenschaften wurde der Klebstoff 2 Stunden nach der Herstellung mittels einer Presse zu einem Film von 3 mm Dicke gepresst, der Film während 14 Tagen im Normklima ausgehärtet und nach DIN EN 53504 auf Zugfestigkeit, Bruchdehnung und E-Modul (Zuggeschwindigkeit: 200 mm/min) geprüft.

Beide Klebstoffe härteten vollständig blasenfrei aus.

Die Ergebnisse der Prüfungen sind in der Tabelle 7 aufgeführt.

**Tabelle 7: Eigenschaften der elastischen Polyurethan-Klebstoffe der Beispiele 8 bis 9.**

| Beispiel | **8** | **9** |
|---|---|---|
| Standfestigkeit | sehr gut | sehr gut |
| Fadenzug (cm) | 0.5 | 0.5 |
| Hautbildungszeit (min) | 105 | 115 |
| Durchhärtung (mm) | 11 | 10 |
| Shore A-Härte | 47 | 58 |
| Zugfestigkeit (MPa) | 1.4 | 5.8 |
| Bruchdehnung (%) | 670 | 1010 |
| E-Modul bei 0.5-5% Dehnung (MPa) | 2.0 | 3.0 |

Zur Untersuchung des Verhaltens beim Erwärmen und wieder Abkühlen der Klebstoffe wurde der für die mechanische Prüfung hergestellte, ausgehärtete Klebstofffilm in Stücke von 10x10 mm geschnitten und diese wie in Beispiel 1 beschrieben untersucht. Ein Stück des ungeschnittenen Films wurde im Ofen auf Teflonunterlage während 10 Minuten auf 160 °C erwärmt, bis er zu fliessen begann. Dann liess man den Film wieder auf Raumtemperatur abkühlen, prüfte ihn wie oben beschrieben gemäss DIN EN 53504 auf mechanische Eigenschaften und berechnete die Abweichungen von den am nicht erwärmten Film gemessenen Werten. Die Ergebnisse dieser Untersuchungen sind in Tabelle 8 dargestellt.

**Tabelle 8: Verhalten beim Erwärmen/Abkühlen der elastischen Polyurethan-Klebstoffe der Beispiele 8 bis 9.**

| Beispiel | **8** | **9** |
|---|---|---|
| *Verhalten nach Erwärmen:* | | |
| 5 min. 100 °C | keine Veränderung | keine Veränderung |
| 5 min. 120 °C | keine Veränderung | keine Veränderung |
| 5 min. 140 °C | wird etwas weicher | keine Veränderung |
| 5 min. 160 °C | gut verstreichbar | wird weich |
| 5 min. 180 °C | gut verstreichbar | gut verstreichbar |
| 5 min. 200 °C | beginnt zu rauchen, wirft Blasen | gut verstreichbar |

| *Verhalten nach Erwärmen und wieder Abkühlen:* | | |
|---|---|---|
| 5 min. 160 °C / 5 min.RT 5 min.180 °C / 5 min.RT 5 min.200 °C / 5 min.RT | klebefrei, elastisch (wie zu Beginn) klebefrei, elastisch (wie zu Beginn) klebrig, zersetzt | klebefrei, elastisch (wie zu Beginn) klebefrei, elastisch (wie zu Beginn) klebefrei, elastisch (wie zu Beginn) |

| *Mechanische Eigenschaften nach Erwärmen*/*Abkühlen (relativ zu den am nicht erwärmten Film gemessenen Werten* (*vgl. Tabelle 7*)): | | |
|---|---|---|
| Zugfestigkeit | 0% (160 °C) -15% (180 °C) | -14% (180 °C) |
| Bruchdehnung | -8% (160 °C) -35% (180 °C) | -4% (180 °C) |
| E-Modul bei 0.5-5% Dehnung | -5% (160 °C) -15% (180 °C) | -6% (180 °C) |

| *Verhalten nach Erwärmen*/ *Abkühlen*/ *wieder Erwärmen:* | | |
|---|---|---|
| 5 min.160 °C/5 min.RT/ 5 min.160 °C | gut verstreichbar | (nicht bestimmt) |
| 5 min.180 °C/5 min.RT/ 5 min. 180 °C | gut verstreichbar | gut verstreichbar |

| *Verhalten nach 2 Cyclen (Erwärmen* /*Abkühlen* / *Erwärmen* /*Abkühlen):* | | |
|---|---|---|
| 160 °C/ RT/160 °C/RT, je 5 min. | klebefrei, elastisch (wie zu Beginn) | (nicht bestimmt) |
| 180 °C/ RT/180 °C/RT, je 5 min. | schwach klebrig, elastisch | klebefrei, elastisch (wie zu Beginn) |

### Bezugszeichenliste

- 1: Windschutzscheibe
- 2: Glaskeramik
- 3: Klebstoff
- 4: Glasscheibe
- 5: beschädigte Glasscheibe
- 6: Karosserie
- 7: Wärmestrahlung
- 8: Stapel mit Windschutzscheiben

## Patentansprüche

1. Polyurethanpolymer P enthaltend mindestens eine Harnstoffgruppe, **dadurch gekennzeichnet,**
A) **dass** die Harnstoffgruppe disubstituiert ist und dasjenige Stickstoffatom, welches beim Aufbau dieser Harnstoffgruppe aus einer Isocyanatgruppe und einer primären Aminogruppe von der primären Aminogruppe stammt, direkt zu einem tertiären Kohlenstoffatom gebunden ist;
und/oder
B) **dass** die Harnstoffgruppe trisubstituiert ist und dasjenige Stickstoffatom, welches beim Aufbau dieser Harnstoffgruppe aus einer Isocyanatgruppe und einer sekundären Aminogruppe von der sekundären Aminogruppe stammt, direkt zu mindestens einem sekundären oder tertiären Kohlenstoffatom gebunden ist.

2. Polyurethanpolymer **P** gemäss Anspruch 1 enthaltend mindestens ein Strukturelement der Formel (I) 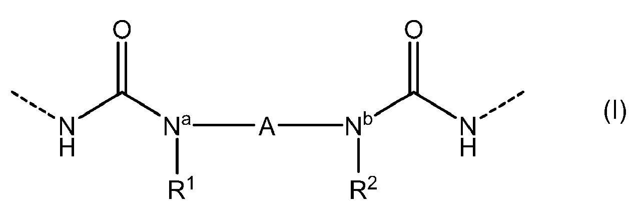 wobei N^{a} und N^{b}
für Stickstoffatome stehen;
R¹
für einen einwertigen Kohlenwasserstoffrest mit 1 bis 10 C-Atomen steht, welcher über ein sekundäres oder tertiäres C-Atom zu N^{a} gebunden ist;
oder
zusammen mit R² für einen zweiwertigen Kohlenwasserstoffrest mit 2 bis 20 C-Atomen steht, welcher über ein sekundäres oder tertiäres C-Atom zu N^{a} gebunden ist, mit der Massgabe, dass A in diesem Fall über ein sekundäres oder tertiäres C-Atom zu N^{b} gebunden ist;
oder zusammen mit A für einen dreiwertigen Kohlenwasserstoffrest mit 5 bis 30 C-Atomen steht, welcher jeweils über mindestens ein sekundäres oder tertiäres C-Atom zu N^{a} und zu N^{b} gebunden ist, mit der Massgabe, dass das zu N^{b} gebundene C-Atom tertiär ist, falls R² für H steht;
oder
zusammen mit A und R² für einen vierwertigen Kohlenwasserstoffrest mit 8 bis 30 C-Atomen steht, welcher jeweils über mindestens ein sekundäres oder tertiäres C-Atom zu N^{a} und zu N^{b} gebunden ist;
oder
für ein Wasserstoffatom steht, mit der Massgabe, dass A für einen zweiwertigen Kohlenwasserstoffrest steht, welcher über ein tertiäres C-Atom zu N^{a} gebunden ist;
R²
für einen einwertigen Kohlenwasserstoffrest mit 1 bis 10 C-Atomen steht, welcher über ein sekundäres oder tertiäres C-Atom zu N^{b} gebunden ist;
oder
zusammen mit R¹ für einen zweiwertigen Kohlenwasserstoffrest mit 2 bis 20 C-Atomen steht, welcher über ein sekundäres oder tertiäres C-Atom zu N^{b} gebunden ist, mit der Massgabe, dass A in diesem Fall über ein sekundäres oder tertiäres C-Atom zu N^{a} gebunden ist;
oder
zusammen mit A für einen dreiwertigen Kohlenwasserstoffrest mit 5 bis 30 C-Atomen steht, welcher jeweils über mindestens ein sekundäres oder tertiäres C-Atom zu N^{a} und zu N^{b} gebunden ist, mit der Massgabe, dass das zu N^{a} gebundene C-Atom tertiär ist, falls R¹ für H steht;
oder
zusammen mit A und R¹ für einen vierwertigen Kohlenwasserstoffrest mit 8 bis 30 C-Atomen steht, welcher jeweils über mindestens ein sekundäres oder tertiäres C-Atom zu N^{a} und zu N^{b} gebunden ist;
oder
für ein Wasserstoffatom steht, mit der Massgabe, dass A in diesem Fall für einen zweiwertigen Kohlenwasserstoffrest steht, welcher über ein tertiäres C-Atom zu N^{b} gebunden ist;
A
für einen zweiwertigen Kohlenwasserstoffrest mit 2 bis 20 C-Atomen steht, welcher jeweils über ein sekundäres oder tertiäres C-Atom zu N^{a} und zu N^{b} gebunden ist, mit der Massgabe, dass das zu N^{a} gebundene C-Atom tertiär ist, falls R¹ für H steht, und mit der Massgabe, dass das zu N^{b} gebundene C-Atom tertiär ist, falls R² für H steht;
oder
zusammen mit R¹ für einen dreiwertigen Kohlenwasserstoffrest mit 5 bis 30 C-Atomen, welcher jeweils über mindestens ein sekundäres oder tertiäres C-Atom zu N^{a} und zu N^{b} gebunden ist, mit der Massgabe, dass das zu N^{b} gebundene C-Atom tertiär ist, falls R² für H steht;
oder
zusammen mit R² für einen dreiwertigen Kohlenwasserstoffrest mit 5 bis 30 C-Atomen, welcher jeweils über mindestens ein sekundäres oder tertiäres C-Atom zu N^{a} und zu N^{b} gebunden ist, mit der Massgabe, dass das zu N^{a} gebundene C-Atom tertiär ist, falls R¹ für H steht;
oder
zusammen mit R¹ und R² für einen vierwertigen Kohlenwasserstoffrest mit 8 bis 30 C-Atomen, welcher jeweils über ein sekundäres oder tertiäres C-Atom zu N^{a} und zu N^{b} gebunden ist;
und wobei die Kohlenwasserstoffreste in A, R¹ und R² gegebenenfalls Heteroatome enthalten, mit der Massgabe, dass diese weder zu N^{a} noch zu N^{b} in α-Position stehen.

3. Polyurethanpolymer **P** gemäss einem der vorhergehenden Ansprüche, **dadurch gekennzeichnet, dass** das Polyurethanpolymer **P** zusätzlich mindestens ein Strukturelement der Formel (XII) und/oder der Formel (XVI) und/oder der Formel (XIII) aufweist 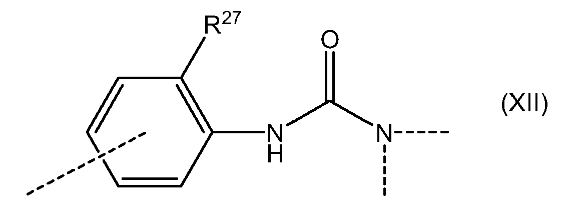 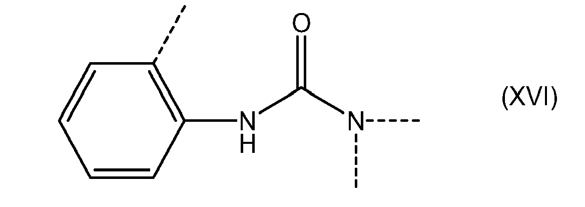 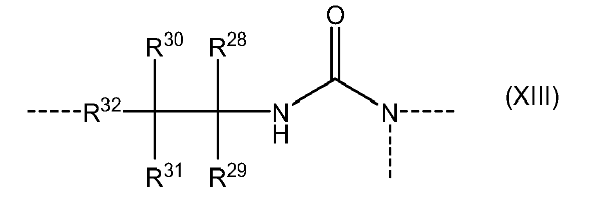 wobei R²⁷
für einen Kohlenwasserstoffrest, insbesondere für einen Kohlenwasserstoffrest mit 1 bis 4 C-Atomen, steht;
R²⁸
für ein Wasserstoffatom steht; oder
für einen einwertigen Kohlenwasserstoffrest mit 1 bis 4 C-Atomen steht;
oder
zusammen mit R²⁹ oder mit R³⁰ für einen zweiwertigen Kohlenwasserstoffrest mit 3 bis 8 C-Atomen steht, der Teil eines, gegebenenfalls substituierten, Rings mit 5 bis 8 C-Atomen ist;
R²⁹
für ein Wasserstoffatom steht;
oder
für einen einwertigen Kohlenwasserstoffrest mit 1 bis 4 C-Atomen;
oder
zusammen mit R²⁸ für einen zweiwertigen Kohlenwasserstoffrest mit 4 bis 8 C-Atomen steht, der Teil eines, gegebenenfalls substituierten, Rings mit 5 bis 8 C-Atomen ist;
R³⁰
für einen einwertigen Kohlenwasserstoffrest mit 1 bis 4 C-Atomen steht;
oder
zusammen mit R³¹ für einen zweiwertigen Kohlenwasserstoffrest mit 4 bis 8 C-Atomen steht, der Teil eines, gegebenenfalls substituierten, Rings mit 5 bis 8 C-Atomen ist;
oder
zusammen mit R³² für einen dreiwertigen Kohlenwasserstoffrest mit 4 bis 12 C-Atomen steht, der Teil eines, gegebenenfalls substituierten, Rings mit 5 bis 8 C-Atomen ist;
oder
unter der Voraussetzung, dass R²⁸ und R²⁹ nicht beide für ein Wasserstoffatom stehen, für ein Wasserstoffatom steht;
R³¹
für einen einwertigen Kohlenwasserstoffrest mit 1 bis 4 C-Atomen steht;
oder
zusammen mit R³⁰ für einen zweiwertigen Kohlenwasserstoffrest mit 4 bis 8 C-Atomen steht, der Teil eines, gegebenenfalls substituierten, Rings mit 5 bis 8 C-Atomen ist;
oder
zusammen mit R³² für einen dreiwertigen Kohlenwasserstoffrest mit 4 bis 12 C-Atomen steht, der Teil eines, gegebenenfalls substituierten, Rings mit 5 bis 8 C-Atomen ist;
oder
unter der Voraussetzung, dass R²⁸ und R²⁹ nicht beide für ein Wasserstoffatom stehen, für ein Wasserstoffatom steht;
R³²
für ein einen zweiwertigen Kohlenwasserstoffrest mit 1 bis 8 C-Atomen steht;
oder
zusammen mit R³⁰ für einen dreiwertigen Kohlenwasserstoffrest mit 4 bis 12 C-Atomen steht, der Teil eines, gegebenenfalls substituierten, Rings mit 5 bis 8 C-Atomen ist.

4. Zusammensetzung zur Herstellung eines Polyurethanpolymers P nach einem der Ansprüche 1 bis 3 umfassend
i) mindestens ein Polyisocyanat;
ii) mindestens ein Polyol; sowie
iii) mindestens ein Diamin der Formel (III) 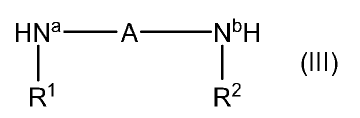 und/oder mindestens ein Dienamin der Formel (V) und/oder einem Diimin der Formel (VI) und/oder einem Iminoenamin der Formel (XVIII) 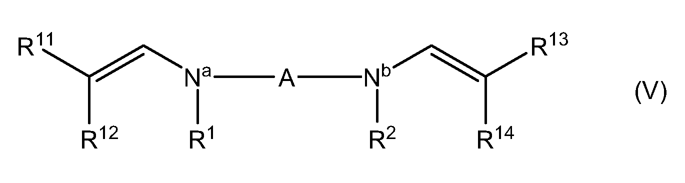 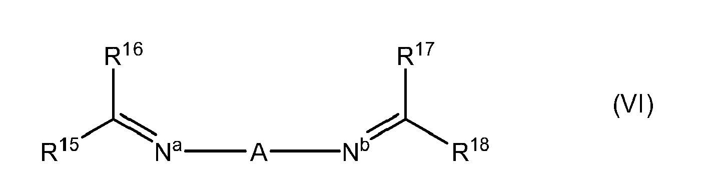 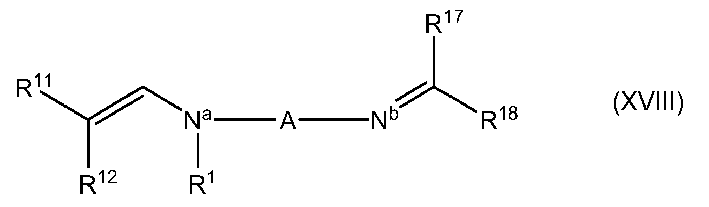
wobei N^{a} und N^{b}
für Stickstoffatome stehen;
R¹
für einen einwertigen Kohlenwasserstoffrest mit 1 bis 10 C-Atomen steht, welcher über ein sekundäres oder tertiäres C-Atom zu N^{a} gebunden ist;
oder
zusammen mit R² für einen zweiwertigen Kohlenwasserstoffrest mit 2 bis 20 C-Atomen steht, welcher über ein sekundäres oder tertiäres C-Atom zu N^{a} gebunden ist, mit der Massgabe, dass A in diesem Fall über ein sekundäres oder tertiäres C-Atom zu N^{b} gebunden ist;
oder
zusammen mit A für einen dreiwertigen Kohlenwasserstoffrest mit 5 bis 30 C-Atomen steht, welcher jeweils über mindestens ein sekundäres oder tertiäres C-Atom zu N^{a} und zu N^{b} gebunden ist, mit der Massgabe, dass das zu N^{b} gebundene C-Atom tertiär ist, falls R² für H steht;
oder
zusammen mit A und R² für einen vierwertigen Kohlenwasserstoffrest mit 8 bis 30 C-Atomen steht, welcher jeweils über mindestens ein sekundäres oder tertiäres C-Atom zu N^{a} und zu N^{b} gebunden ist;
oder
für ein Wasserstoffatom steht, mit der Massgabe, dass A für einen zweiwertigen Kohlenwasserstoffrest steht, welcher über ein tertiäres C-Atom zu N^{a} gebunden ist;
R²
für einen einwertigen Kohlenwasserstoffrest mit 1 bis 10 C-Atomen steht, welcher über ein sekundäres oder tertiäres C-Atom zu N^{b} gebunden ist;
oder
zusammen mit R¹ für einen zweiwertigen Kohlenwasserstoffrest mit 2 bis 20 C-Atomen steht, welcher über ein sekundäres oder tertiäres C-Atom zu N^{b} gebunden ist, mit der Massgabe, dass A in diesem Fall über ein sekundäres oder tertiäres C-Atom zu N^{a} gebunden ist;
oder
zusammen mit A für einen dreiwertigen Kohlenwasserstoffrest mit 5 bis 30 C-Atomen steht, welcher jeweils über mindestens ein sekundäres oder tertiäres C-Atom zu N^{a} und zu N^{b} gebunden ist, mit der Massgabe, dass das zu N^{a} gebundene C-Atom tertiär ist, falls R¹ für H steht;
oder
zusammen mit A und R¹ für einen vierwertigen Kohlenwasserstoffrest mit 8 bis 30 C-Atomen steht, welcher jeweils über mindestens ein sekundäres oder tertiäres C-Atom zu N^{a} und zu N^{b} gebunden ist;
oder
für ein Wasserstoffatom steht, mit der Massgabe, dass A in diesem Fall für einen zweiwertigen Kohlenwasserstoffrest steht, welcher über ein tertiäres C-Atom zu N^{b} gebunden ist;
A
für einen zweiwertigen Kohlenwasserstoffrest mit 2 bis 20 C-Atomen steht, welcher jeweils über ein sekundäres oder tertiäres C-Atom zu N^{a} und zu N^{b} gebunden ist, mit der Massgabe, dass das zu N^{a} gebundene C-Atom tertiär ist, falls R¹ für H steht, und mit der Massgabe, dass das zu N^{b} gebundene C-Atom tertiär ist, falls R² für H steht;
oder
zusammen mit R¹ für einen dreiwertigen Kohlenwasserstoffrest mit 5 bis 30 C-Atomen, welcher jeweils über mindestens ein sekundäres oder tertiäres C-Atom zu N^{a} und zu N^{b} gebunden ist, mit der Massgabe, dass das zu N^{b} gebundene C-Atom tertiär ist, falls R² für H steht;
oder
zusammen mit R² für einen dreiwertigen Kohlenwasserstoffrest mit 5 bis 30 C-Atomen, welcher jeweils über mindestens ein sekundäres oder tertiäres C-Atom zu N^{a} und zu N^{b} gebunden ist, mit der Massgabe, dass das zu N^{a} gebundene C-Atom tertiär ist, falls R¹ für H steht;
oder
zusammen mit R¹ und R² für einen vierwertigen Kohlenwasserstoffrest mit 8 bis 30 C-Atomen, welcher jeweils über ein sekundäres oder tertiäres C-Atom zu N^{a} und zu N^{b} gebunden ist;
R¹¹ und R¹² sowie R¹³ und R¹⁴ sowie R¹⁵ und R¹⁶ sowie R¹⁷ und R¹⁸ unabhängig voneinander entweder jeweils für ein Wasserstoffatom oder für einen einwertigen Kohlenwasserstoffrest mit 1 bis 34 C-Atomen stehen;
oder
paarweise je für einen zweiwertigen Kohlenwasserstoffrest mit 4 bis 20 C-Atomen stehen, der Teil eines, gegebenenfalls substituierten und/oder mindestens ein Heteroatom aufweisenden, carbocyclischen Rings mit 5 bis 8 C-Atomen ist;
und wobei die Kohlenwasserstoffreste in A, R¹ und R² gegebenenfalls Heteroatome enthalten, mit der Massgabe, dass diese weder zu N^{a} noch zu N^{b} in α-Position stehen.

5. Zusammensetzung gemäss Anspruch 4, **dadurch gekennzeichnet, dass** die Zusammensetzung eine einkomponentige Zusammensetzung ist, umfassend
a) mindestens ein Isocyanatgruppen aufweisendes Polyurethanpolymer **P1,** welches hergestellt ist aus
i') mindestens einem Polyisocyanat,
ii') mindestens einem Polyol und
iii') mindestens einem Diamin der Formel (III);
oder
b) mindestens ein Isocyanatgruppen aufweisendes Polyurethanpolymer **P2**, welches hergestellt ist aus
i") mindestens einem Polyisocyanat und
ii") mindestens einem Polyol;
sowie mindestens ein Dienamin der Formel (V) und/oder ein Diimin der Formel (VI) und/oder ein Iminoenamin der Formel (XVIII);

6. Zusammensetzung gemäss Anspruch 4, **dadurch gekennzeichnet, dass** die Zusammensetzung eine zweikomponentige Zusammensetzung ist, umfassend
a') eine erste Komponente **K1** umfassend mindestens ein Polyisocyanat und/oder mindestens ein Isocyanatgruppen aufweisendes Polyurethanpolymer **P2**, welches hergestellt ist aus
i"') mindestens einem Polyisocyanat und
ii"') mindestens einem Polyol;
sowie
b') eine zweite Komponente **K2** umfassend mindestens ein Diamin der Formel (III).

7. Zusammensetzung gemäss einem der Ansprüche 4 oder 5, **dadurch gekennzeichnet, dass** die Reste R¹⁵ und R¹⁷ jeweils für ein Wasserstoffatom stehen und die Reste R¹¹, R¹², R¹³, R¹⁴, R¹⁶ und R¹⁸ unabhängig voneinander jeweils für einen einwertigen Kohlenwasserstoffrest mit 1 bis 20, insbesondere mit 1 bis 6, C-Atomen stehen.

8. Zusammensetzung gemäss einem der Ansprüche 4 oder 5, **dadurch gekennzeichnet, dass** die Reste R¹⁶ und R¹⁸ unabhängig voneinander jeweils für einen Rest der Formel (VII) oder (VIII) stehen, 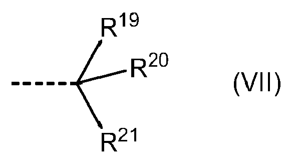
-----R²² (VIII)
wobei
R¹⁹
für einen linearen oder verzweigten Kohlenwasserstoffrest mit 1 bis 31 C-Atomen, gegebenenfalls mit cyclischen und/oder aromatischen Anteilen und/oder gegebenenfalls mit mindestens einem Heteroatom, insbesondere Sauerstoff in Form von Ether-, Ester-, oder Aldehydgruppen, steht;
R²⁰ und R²¹
unabhängig voneinander entweder jeweils für einen einwertigen Kohlenwasserstoffrest mit 1 bis 12 C-Atomen stehen;
oder
paarweise je für einen zweiwertigen Kohlenwasserstoffrest mit 4 bis 20 C-Atomen stehen, der Teil eines, gegebenenfalls substituierten, Rings mit 5 bis 8 C-Atomen ist; und
R²²
für eine substituierte oder unsubstituierte Aryl- oder Heteroaryl-Gruppe steht, welche eine Ringgrösse von 5 bis 8 Atomen aufweist;
oder
für einen Rest der Formel (IX) steht 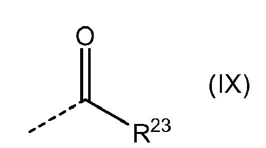
wobei R²³
für ein Wasserstoffatom oder für eine Alkoxygruppe mit 1 bis 20 C-Atomen steht;
oder für eine substituierte oder unsubstituierte Alkenyl- oder Arylalkenylgruppe mit 6 bis 20 C-Atomen steht.

9. Zusammensetzung gemäss Anspruch 8, **dadurch gekennzeichnet, dass** der Rest R¹⁹ jeweils für einen Rest der Formel (X) oder (XI) steht, 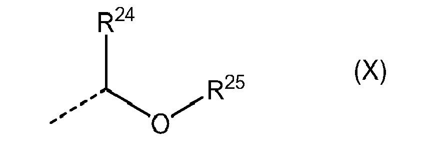 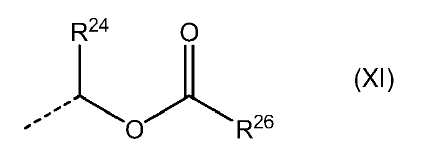 wobei R²⁴
für ein Wasserstoffatom oder für eine Alkyl- oder für eine Cycloalkyl- oder für eine Arylalkylgruppe, insbesondere für ein Wasserstoffatom, steht;
R²⁵
für einen, gegebenenfalls Heteroatome aufweisenden, Kohlenwasserstoffrest mit 1 bis 30, insbesondere mit 11 bis 30, C-Atomen steht; und
R²⁶
entweder für ein Wasserstoffatom steht;
oder
für einen linearen oder verzweigten Kohlenwasserstoffrest mit 1 bis 29, insbesondere mit 11 bis 29, C-Atomen steht, welcher gegebenenfalls cyclische Anteile und/oder mindestens ein Heteroatom aufweist;
oder
für einen einfach oder mehrfach ungesättigten, linearen oder verzweigten Kohlenwasserstoffrest mit 5 bis 29 C-Atomen steht; oder für einen, gegebenenfalls substituierten, aromatischen oder heteroaromatischen 5- oder 6-gliedrigen Ring steht.

10. Zusammensetzung gemäss einem der Ansprüche 8 oder 9, **dadurch gekennzeichnet, dass** die Reste R²⁰ und R²¹ je für eine Methylgruppe stehen.

11. Zusammensetzung gemäss einem der Ansprüche 4 bis 6, **dadurch gekennzeichnet, dass** das Polyisocyanat mindestens ein Strukturelement der Formel (XIV) und/oder der Formel (XV) aufweist 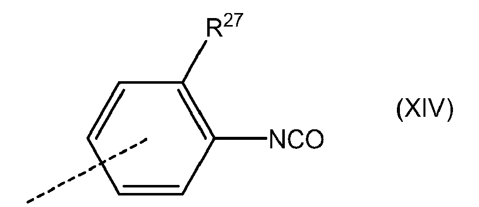 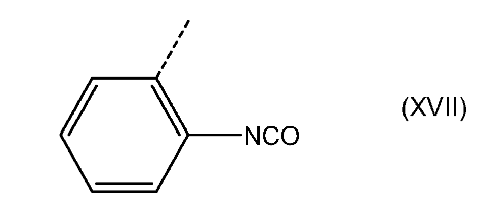 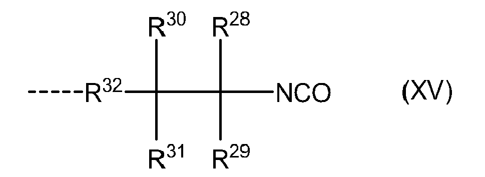 wobei R²⁷
für einen Kohlenwasserstoffrest, insbesondere für einen Kohlenwasserstoffrest mit 1 bis 4 C-Atomen, steht;
R²⁸
für ein Wasserstoffatom steht; oder
für einen einwertigen Kohlenwasserstoffrest mit 1 bis 4 C-Atomen steht;
oder
zusammen mit R²⁹ oder mit R³⁰ für einen zweiwertigen Kohlenwasserstoffrest mit 3 bis 8 C-Atomen steht, der Teil eines, gegebenenfalls substituierten, Rings mit 5 bis 8 C-Atomen ist;
R²⁹
für ein Wasserstoffatom steht;
oder
für einen einwertigen Kohlenwasserstoffrest mit 1 bis 4 C-Atomen; oder
zusammen mit R²⁸ für einen zweiwertigen Kohlenwasserstoffrest mit 4 bis 8 C-Atomen steht, der Teil eines, gegebenenfalls substituierten, Rings mit 5 bis 8 C-Atomen ist;
R³⁰
für einen einwertigen Kohlenwasserstoffrest mit 1 bis 4 C-Atomen steht;
oder
zusammen mit R³¹ für einen zweiwertigen Kohlenwasserstoffrest mit 4 bis 8 C-Atomen steht, der Teil eines, gegebenenfalls substituierten, Rings mit 5 bis 8 C-Atomen ist;
oder
zusammen mit R³² für einen dreiwertigen Kohlenwasserstoffrest mit 4 bis 12 C-Atomen steht, der Teil eines, gegebenenfalls substituierten, Rings mit 5 bis 8 C-Atomen ist;
oder
unter der Voraussetzung, dass R²⁸ und R²⁹ nicht beide für ein Wasserstoffatom stehen, für ein Wasserstoffatom steht;
R³¹
für einen einwertigen Kohlenwasserstoffrest mit 1 bis 4 C-Atomen steht;
oder
zusammen mit R³⁰ für einen zweiwertigen Kohlenwasserstoffrest mit 4 bis 8 C-Atomen steht, der Teil eines, gegebenenfalls substituierten, Rings mit 5 bis 8 C-Atomen ist;
oder
zusammen mit R³² für einen dreiwertigen Kohlenwasserstoffrest mit 4 bis 12 C-Atomen steht, der Teil eines, gegebenenfalls substituierten, Rings mit 5 bis 8 C-Atomen ist;
oder
unter der Voraussetzung, dass R²⁸ und R²⁹ nicht beide für ein Wasserstoffatom stehen, für ein Wasserstoffatom steht;
R³²
für ein einen zweiwertigen Kohlenwasserstoffrest mit 1 bis 8 C-Atomen steht;
oder
zusammen mit R³⁰ für einen dreiwertigen Kohlenwasserstoffrest mit 4 bis 12 C-Atomen steht, der Teil eines, gegebenenfalls substituierten, Rings mit 5 bis 8 C-Atomen ist.

12. Zusammensetzung gemäss Anspruch 11, **dadurch gekennzeichnet, dass** das Polyisocyanat ein Diisocyanat ist, insbesondere ein Diisocyanat, welches ausgewählt ist aus der Gruppe bestehend aus 1-Isocyanato-3,3,5-trimethyl-5-isocyanatomethyl-cyclohexan (= Isophorondiisocyanat oder IPDI), 2,4- und 2,6-Toluylendiisocyanat (TDI), 2,4'- und 2,2'-Diphenylmethandiisocyanat (MDI), 2,2,4- und 2,4,4-Trimethyl-1,6-diisocyanatohexan (TMDI) und m-Tetramethylxylylendiisocyanat (TMXDI).

13. Zusammensetzung gemäss einem der Ansprüche 4 bis 6, **dadurch gekennzeichnet, dass** das Diamin der Formel (III) ausgewählt ist aus der Gruppe bestehend aus N,N'-Di-tert.-butylhexan-1,6-diamin, N,N'-Dicyclohexylhexan-1,6-diamin, N,N'-Diisopropylhexan-1,6-diamin, N,N'-Bis(2-nitropropan-2-yl)hexan-1,6-diamin, 1,8-Menthandiamin, N-Isopropyl-3-((isopropylamino)methyl)-3,5,5-trimethylcyclohexanamin, N-(1,2-Dimethylpropyl)-3-((1,2-dimethylpropylamino)methyl)-3,5,5-trimethylcyclohexanamin, N-(1,3-Dimethylbutyl)-3-((1,3-dimethylbutylamino)-methyl)-3,5,5-trimethylcyclohexanamin, 2,2',6,6'-Tetramethyl-4,4'-bipiperidin, 1,4-Dimethylcyclohexan-1,4-diamin und 2,4-Dimethyl-4-methylaminopiperidin.

14. Zusammensetzung gemäss einem der Ansprüche 4 bis 13, **dadurch gekennzeichnet, dass** die Zusammensetzung mindestens einen Füllstoff, insbesondere in der Menge von 10 bis 70 Gew.-%, bevorzugt 20 bis 60 Gew.-%, bezogen auf die gesamte Zusammensetzung, enthält.

15. Zusammensetzung gemäss Anspruch 14, **dadurch gekennzeichnet, dass** der Füllstoff Russ oder Kreide ist.

16. Verwendung einer Zusammensetzung gemäss einem der Ansprüche 4 bis 15 als Klebstoff, Dichtstoff und/oder Beschichtung für Bau- und Industrieanwendungen.

17. Verfahren des Verklebens von Substraten **S1** und **S2** umfassend die Schritte
a1) Applizieren einer Zusammensetzung gemäss einem der Ansprüche 4 bis 15 auf ein Substrat **S1** und/oder ein Substrat **S2;**
b1) Kontaktieren der Substrate **S1** und **S2** über die applizierte Zusammensetzung; und
c1) Aushärten der applizierten Zusammensetzung, insbesondere mittels Wasser;
wobei die Substrate **S1** und **S2** gleich oder verschieden voneinander sind.

18. Verfahren des Verklebens von Substraten **S1** und **S2** umfassend die Schritte
a2) Applizieren einer Zusammensetzung gemäss einem der Ansprüche 4 bis 15 auf ein Substrat **S1** und/oder ein Substrat **S2;**
b2) Aushärten der applizierten Zusammensetzung insbesondere mittels Wasser;
c2) Erhitzen der ausgehärteten Zusammensetzung auf dem Substrat **S1** und/oder dem Substrat **S2** auf eine Temperatur von 100 °C bis 200 °C;
d2) Kontaktieren der Substrate **S1** und **S2** über die applizierte Zusammensetzung;
e2) Abkühlen und Aushärten der applizierten Zusammensetzung;
wobei die Substrate **S1** und **S2** gleich oder verschieden voneinander sind.

19. Verfahren des Entklebens einer gemäss einem der Ansprüche 17 oder 18 hergestellten Klebeverbindung zwischen den Substraten **S1** und **S2** umfassend die Schritte
a3) Erhitzen der ausgehärteten Zusammensetzung auf eine Temperatur von 100 °C bis 200 °C; und
b3) Lösen des Haftverbundes zwischen den Substraten **S1** und **S2.**

20. Verfahren des Verklebens der Substrate **S1** und/oder **S2**, welche gemäss einem Verfahren des Entklebens nach Anspruch 19 entklebt wurden, umfassend die Schritte
a4) Erhitzen der ausgehärteten Zusammensetzung auf dem Substrat **S1** und/oder dem Substrat **S2** auf eine Temperatur von 100 °C bis 200 °C;
b4) Kontaktieren der Substrate **S1** und/oder **S2** und/oder **S3** über die erhitzte Zusammensetzung;
c4) Abkühlen und Aushärten der Zusammensetzung.
wobei die Substrate **S1** und **S2** und **S3** gleich oder verschieden voneinander sind.

21. Verfahren des Abdichtens oder des Beschichtens umfassend die Schritte
a5) Applizieren einer Zusammensetzung gemäss einem der Ansprüche 4 bis 15 auf ein Substrat **S1** und/oder ein Substrat **S2;** und
b5) Aushärten der applizierten Zusammensetzung insbesondere mittels Wasser;
wobei die Substrate **S1** und **S2** gleich oder verschieden voneinander sind.

22. Verfahren des Ablösens einer gemäss Anspruch 21 hergestellten Abdichtung oder Beschichtung auf den Substraten **S1** und/oder **S2** umfassend die Schritte
a6) Erhitzen der ausgehärteten Zusammensetzung auf eine Temperatur von 100 °C bis 200 °C; und
b6) Lösen der Abdichtung oder Beschichtung vom Substrat **S1** und/oder **S2**.

23. Verfahren gemäss einem der Ansprüche 17 bis 22, **dadurch gekennzeichnet, dass** das Substrat **S1** und/oder **S2** und/oder **S3** ausgewählt ist aus der Gruppe bestehend aus Beton, Zement, Mörtel, Backstein, Ziegel, Gips, Naturstein, Asphalt, Metall, Metalllegierung, Holz, Keramik, Glas, Kunststoff, Pulverbeschichtung, Farbe und Lack.

24. Artikel, welcher nach einem Verfahren gemäss einem der Ansprüche 17 bis 23 verklebt, entklebt, abgedichtet oder beschichtet wurde.

25. Artikel gemäss Anspruch 24, **dadurch gekennzeichnet, dass** der Artikel ein Gebäude oder ein Bauwerk des Hoch- oder Tiefbaus, ein industriell gefertigtes Gut oder ein Konsumgut, insbesondere ein Fenster, eine Haushaltsmaschine oder ein Transportmittel, insbesondere ein Fahrzeug, oder ein Anbauteil eines Fahrzeugs, ist.

26. Artikel, auf welchem eine Zusammensetzung gemäss einem der Ansprüche 4 bis 15 als Rund- oder Dreiecksraupe oder als Kantenumhüllung appliziert wurde, wobei die applizierte Zusammensetzung, insbesondere mittels Wasser, zumindest teilweise ausgehärtet ist.

27. Artikel gemäss Anspruch 26, **dadurch gekennzeichnet, dass** der Artikel eine Fensterscheibe eines Automobils ist.
